# EUROPÄISCHE PATENTSCHRIFT

(11) **EP 1 151 591 B1**
(45) Veröffentlichungstag und Bekanntmachung des Hinweises auf die Patenterteilung: **22.09.2004**
(21) Anmeldenummer: 00903572.6
(22) Anmeldetag: 11.01.2000
(51) Int. Cl.: H04L 29/06

(54) **DATENZUGRIFFS- UND -VERWALTUNGSSYSTEM SOWIE VERFAHREN ZUM DATENZUGRIFF UND ZUR DATENVERWALTUNG FÜR EIN RECHNERSYSTEM**
DATA ACCESS AND MANAGEMENT SYSTEM AND DATA ACCESS AND MANAGEMENT METHOD FOR A COMPUTER SYSTEM
SYSTEME D'ACCES A DES DONNEES ET DE GESTION DE DONNEES, ET PROCEDE CORRESPONDANT DESTINE A UN SYSTEME INFORMATIQUE

(30) Priorität: 11.01.1999 DE 19900636
(43) Veröffentlichungstag der Anmeldung: 07.11.2001
(73) Patentinhaber: Gailer, Peter, 85051 Ingolstadt (DE); Binzinger, Thomas, 81827 München (DE); Günster, Joachim, 85591 Vaterstetten (DE)
(72) Erfinder: BINZINGER, Thomas, D-81827 München (DE); GÜNSTER, Joachim, D-85591 Vaterstetten (DE)
(74) Vertreter: Schmidt, Steffen J., Dipl.-Ing.
(86) Internationale Anmeldenummer: PCT/EP2000/000141
(87) Internationale Veröffentlichungsnummer: WO 2000/041471

(56) Entgegenhaltungen:
- EP-A- 0 767 585
- EP-A- 0 884 870
- WO-A-98/18076
- WO-A-98/26559
- US-A- 5 459 837
- ABBASOV A M: "OPTIMIZING THE LOCATION OF DATABASES WITH COPIES IN COMPUTER NETWORKS" AUTOMATIC CONTROL AND COMPUTER SCIENCES,US,ALLERTON PRESS, INC. NEW YORK, Bd. 22, Nr. 4, 1. Januar 1988 (1988-01-01), Seiten 58-62, XP000120119 ISSN: 0146-4116

## Beschreibung

### Hintergrund der Erfindung

Die Erfindung betrifft im allgemeinen ein Datenzugriffs- und -verwaltungssystem sowie ein Verfahren zum Datenzugriff und zur Datenverwaltung für ein Rechnersystem. Insbesondere betrifft die Erfindung ein System und ein Verfahren zur Optimierung des Zugriffs auf Daten und deren Bearbeitung in verteilten und vernetzten Rechnerstrukturen.

### Stand der Technik

Die zunehmende Anwendung verteilter und vemetzter Rechnerstrukturen und - anordnungen hat zur Folge, daß Daten und Funktionalitäten zur Datenverwaltung nicht mehr von einheitlichen Rechnersystemen bereitgestellt bzw. genutzt werden, sondern von unterschiedlichen, verteilten Rechnersystemen, die untereinander vernetzt sind.

Bei herkömmlichen verteilten und vernetzten Rechnerstrukturen und -anordnungen werden im allgemeinen Daten und Funktionalitäten von einem zentralen Rechnersystem, einem sogenannten Server, oder einer Ansammlung zentraler Rechnersysteme, sogenannten Serverclustern, zur Verfügung gestellt. Andere Rechnersysteme, sogenannte Clients, wie z.B. Personal Computer, stehen beispielsweise über Netzwerke oder Busse mit dem zentralen Rechnersystem in Verbindung, um auf die Daten und Funktionalitäten zuzugreifen. Dabei treten verschiedene, die Versorgung von Clients mit Daten und/oder Funktionalitäten einschränkende Probleme auf, insbesondere, wenn der Zugriff auf ein zentrales Rechnersystem durch mehrere Clients in einem kurzen Zeitraum oder sogar gleichzeitig erfolgt. Ein Beispiel hierfür sind Computerspiele, die über das Internet mehreren Spielern zur Verfügung gestellt werden.

Da nur ein zentrales Rechnersystem (Server) verwendet wird, führt dessen Ausfall dazu, daß die Clients nicht mehr auf die bereitgehalten Daten und Funktionalitäten zugreifen können. Auch der Ausfall von Netzwerkbereichen, die den Server mit den Clients verbinden, führt zu einem Totalausfall der gesamten Rechnerstruktur.

Das weiteren sind die Übertragungszeiten von dem Server zu einzelnen Clients z.T. stark unterschiedlich, da die Verbindungsqualität zu den Clients z.B. aufgrund der unterschiedlichen Entfernungen zwischen dem Server und den Clients sowie unterschiedlichen Übertragungsleistungen in verschiedenen Bereichen des Netzwerks variiert. Besonders bei interaktiven Operationen mehrerer Clients in Verbindung mit dem Server führt eine derartige unzureichende Übertragungscharakteristik oft zu einer unbefriedigenden Versorgung einzelner Clients mit Daten/Funktionalitäten. Hier sind z.B. die sogenannten "lags" (Verzögerungen) zu nennen, die die Kommunikation zwischen dem Server und den Clients stören.

Für den optimierten Datenzugriff und die Datenverwaltung in verteilten und vernetzten Rechnerstrukturen sind zahlreiche unterschiedliche Systeme und Verfahren in dem Stand der Technik beschrieben. Das Dokument WO 98 18076 offenbart ein System und ein Verfahren zur Zugriffs- und Speicheroptimierung von Daten. Es werden dazu sogenannte "mirror service provider" verwendet um Daten redundant zu speichern.

Das Dokument WO 98 26559 beschreibt ein verteiltes Computernetzwerk- system und - verfahren um Zugriffe von Rechnereinheiten auf gespiegelte Server zu verteilen. Er werden dazu sog. "directory server" verwendet. Diese "directory server" dienen lediglich dazu, hinsichtlich einer Datenübertragungsoptimierung geeignete

Datenübertragungsverbindungen auszuwählen. Es ist aber nicht vorgesehen redundante Daten untereinander zu verschieben um den Zugriff zu optimieren. Außerdem sind Zugriffe von Rechnereinheiten (Clients) erforderlich um die "beste" Verbindung zu erkennen.

Auch Dokument EP 0 884 870 zeigt ein dynamisches System um Datenspeicher zu replizieren und dadurch Zugriffe von Rechnereinheiten zu optimieren. Es werden Router verwendet die die Zugriffe von Rechnereinheiten zählen und dadurch Daten auf andere Speichereinheiten verlegen können.

### Aufgaben der Erfindung

Die Aufgabe der vorliegenden Erfindung ist es, die oben aufgeführten Probleme des bekannten Stands der Technik zu beseitigen. Insbesondere ist es eine Aufgabe der Erfindung, die Übertragungsqualität zwischen Clients und Daten bereitstellenden Einrichtungen einer vernetzten, verteilten Rechnerstruktur so zu optimieren, daß jeder Client mit den jeweils angeforderten Daten in einer gewünschten, anwendungsspezifischen Weise versorgt wird. Vorzugsweise soll die Erfindung eine möglichst schnelle Versorgung mit Daten/Funktionalitäten ermöglichen, wobei zusätzlich gewährleistet sein soll, daß die Übertragungen möglichst fehlertolerant durchgeführt werden.

Des weiteren soll die Erfindung die Funktionsfähigkeit eines verteilten, vernetzten Rechnersystems bei einem Ausfall von Daten bereitstellenden Einrichtungen der Rechnerstruktur sicherstellen. Die Erfindung soll auch die Funktionsfähigkeit eines verteilten, vemetzten Rechnersystems bei einem Ausfall einzelner Bereiche der Netzwerke gewährleisten, über die die Daten bereitstellenden Einrichtungen und Clients miteinander in Verbindung stehen.

Des weiteren soll die Erfindung ermöglichen, daß Clients nur aktuelle Daten zur Verfügung gestellt werden. Auch soll die Erfindung die erforderliche Übertragungskapazitäten eines vernetzten, verteilten Rechnersystems reduzieren.

### Kurzbeschreibung der Erfindung

Die oben genannten Aufgaben der Erfindung werden mit Systemen gemäß den Ansprüchen 1, 17 und 18 und mit Verfahren gemäß den Ansprüchen 30, 44 und 45 sowie durch bevorzugte Ausführungsformen der erfindungsgemäßen Systeme nach einem der Ansprüche 2 bis 16 sowie nach einem der Ansprüche 19 bis 29 und durch bevorzugte Ausführungsformen der erfindungsgemäßen Verfahren nach einem der Ansprüche 31 bis 43 sowie nach einem der Ansprüche 46 bis 55 gelöst.

Bei dem erfindungsgemäßen System nach Anspruch 1 sind die in einem Rechnersystem vorliegenden Daten in Abhängigkeit von ermittelten vorbestimmten Parameter der Datenübertragung zwischen Datenspeichereinrichtungen und Rechnereinheiten in den Datenspeichereinrichtungen redundant gespeichert und die Rechnereinheiten greifen in Abhängigkeit von den ermittelten vorbestimmten Parameter auf eine der Datenspeichereinrichtungen zu. Auf diese Weise wird ermöglicht, Datenübertragungen zwischen den Datenspeichereinrichtungen und den Rechnereinheiten in einer gewünschten anwendungsspezifischen Weise zu optimieren, um beispielsweise schneller oder mit weniger Fehlern behaftet durchgeführt zu werden.

Des weiteren umfassen die Datenspeichereinrichtungen Steuereinheiten zur Steuerung des Datenzugriffs und der Datenverwaltung, um unabhängig von anderen Einrichtungen des Rechnersystems zu arbeiten. Dies reduziert die Menge der zu übertragenden Daten in dem des erfindungsgemäßen System und erhöht die Ausfallsicherheit des erfindungsgemäßen Systems, da die Daten nicht zentral bearbeitet werden.

Um eine zusätzliche Optimierung zu erreichen, ist es zu bevorzugen, daß die Datenspeichereinrichtungen in dem System redundant gespeicherten Daten in Abhängigkeit der ermittelten Parameter von Datenübertragungen zwischen den einzelnen Datenspeichereinrichtungen und der Rechnereinheit untereinander kopieren und in den Datenspeichereinrichtungen löschen, in denen die kopierten Daten zuvor gespeichert waren. Somit können Daten innerhalb des erfindungsgemäßen Systems von einer Datenspeichereinrichtung zu anderen Datenspeichereinrichtungen verschoben werden, deren Parameter der Datenübertragung für den jeweiligen Anwendungsfall der Erfindung in höherem Maß eine Optimierung des Datenzugriffs und der Datenverwaltung zu ermöglichen.

Außerdem ist es zu bevorzugen, daß die Datenspeichereinrichtungen die gespeicherten Daten unabhängig von der Rechnereinheit bearbeiten. Auf diese Weise können Daten dezentral bearbeitet werden, wodurch eine erhöhte Datensicherheit und erhöhte Ausfallsicherheit sowie eine Entlastung einzelner Systemkomponenten erreicht wird.

Bei einer weiteren Ausführungsform sind die in dem System Daten in Datenteilmengen unterteilt und die Datenspeichereinrichtungen sind so in Zellen unterteilt, daß jede der redundant zu speichernde der Datenteilmengen in jeweils einer der Zellen der entsprechenden Datenspeichereinrichtungen gespeichert sind, um nur die Daten redundant zu speichern, die aktuell benötigt werden.

Des weiteren ist es vorteilhaft, daß die Datenspeichereinrichtungen in Abhängigkeit von den Datenübertragungsparametem in Zellen unterteilt sind, um die Datenübertragungen innerhalb des erfindungsgemäßen Systems weiter zu optimieren.

Um den Datenzugriff und die Datenverwaltung effizienter durchzuführen, kann jede Zelle zusätzliche Daten aufweisen, die die Parameter von Datenübertragungen zwischen den einzelnen Datenspeichereinrichtungen und der Rechnereinheit, und/oder benachbarte Zellen, und/oder Zellen betreffen, die die in dem System redundant gespeicherten Daten umfassen.

Außerdem ist es möglich Zellen zu verwenden, die untereinander zusätzliche Daten austauschen können, die zum Datenzugriff und zur Datenverwaltung verwendet werden. So werden die in dem erfindungsgemäßen System zu übermittelnden Informationen zum Datenzugriff und zur Datenverwaltung zusätzlich reduziert.

Bei speziellen Datenspeichereinrichtungen können die Zellen so gestaltet sein, daß die Parameter von Datenübertragungen zwischen den einzelnen Datenspeichereinrichtungen und der Rechnereinheit für die Zellen einer Datenspeichereinrichtung gleich sind, um einen einheitlichen Datenzugriff für die einzelnen Datenspeichereinrichtungen zu erzielen .

Auch können Rechnereinheiten verwendet werden, die Daten zur Speicherung in den Datenspeichereinrichtungen ausgeben und/oder in den Datenspeichereinrichtungen gespeicherte Daten bearbeiten, um die Datenspeichereinrichtungen zu entlasten.

Um die Daten unabhängig von dem erfindungsgemäßen System zu bearbeiten, können die Rechnereinheiten auch mit einem oder mehreren Benutzern in Verbindung stehen, um die Daten der Datenspeichereinrichtungen weiterzuleiten und/oder von dem Benutzer gesteuert zu werden. Vorzugsweise ist ein derartiger Benutzer ein Personal Computer und/oder eine zentrale Recheneinheit eines Computers und/oder eine weitere Datenspeichereinrichtung.

Auf diese Weise kann die Rechnereinheit auch ein System sein, das Internetdienste zur Verfügung stellt, wie z.B. Datenbankzugriffe und Computerspiele. Die Rechnereinheit kann auch geeignet sein, direkt auf einzelne Zellen der Datenspeichereinrichtungen zuzugreifen, wodurch die einzelnen Datenspeichereinrichtungen von Aufgaben zum Datenzugriff und zur Datenverwaltung entlastet werden.

Insbesondere können die vorbestimmten Parameter von Datenübertragungen zwischen den einzelnen Datenspeichereinrichtungen und der Rechnereinheit die Übertragungsdauer und/oder die Fehlerrate und/oder die Dauer von Datenbearbeitungen der einzelnen Datenspeichereinrichtungen vor der Übertragung der Daten umfassen. Auf diese Weise kann auf Daten schneller zugegriffen werden und es werden Daten zur Verfügung gestellt, die weniger fehlerbehaftet sind.

Die einzelnen Komponenten des erfindungsgemäßen Systems gemäß Anspruch 1 sind über Datenübertragungseinrichtungen miteinander verbunden, wobei diese elektrisch leitende Verbindungen und/oder Bussysteme und/oder Rechnernetzwerke und/oder drahtgebundene oder drahtlose (mobile) Telefonnetzwerke und/oder das Internet umfassen können. Somit eignet sich die vorliegende Erfindung für jede Rechnerstruktur und -anordnung sowie für jedes Rechnersystem, die verteilte und vernetzte Einrichtungen nutzen.

Unter Verwendung der Erfindung kann somit ein Datenbanksystem oder eine Rechnerstruktur zum Datenzugriff und zur Datenverwaltung gemäß Anspruch 17 aufgebaut werden, wobei ein erfindungsgemäßes Datenbanksystem oder eine erfindungsgemäße Rechnerstruktur auch aus lokal benachbart angeordneten Komponenten aufgebaut werden kann.

Des weiteren kann die Erfindung in einem System gemäß Anspruch 18 für ein Computerspiel verwendet werden, das über das Internet zur Verfügung gestellt wird. Wobei hier zu bevorzugen ist, daß wenigstens eine Rechnereinheit ein Intemet-Service-Provider ist, um die vorliegende Erfindung in vorhandene Rechnerstrukturen des Internets zu integrieren und um Internetbenutzern einen erfindungsgemäßen Zugriff auf Daten zu ermöglichen.

Insbesondere eignet sich die Erfindung für interaktive Computerspiele zur Benutzung durch wenigstens zwei Benutzer, um eine optimierte Versorgung der einzelnen Benutzer mit für das Computerspiel erforderlichen Daten zu gewährleisten, wobei jeder Benutzer jeweils mit einer Rechnereinheit verbunden sein kann.

Vorzugsweise werden von den Rechnereinheiten Daten zur Durchführung des Computerspiels an die Benutzer übertragen, wodurch das Computerspiel auch zumindest teilweise unabhängig von den Rechnereinheiten durchgeführt werden kann. Eine weitere Entlastung der Rechnereinheiten und der Datenspeichereinrichtungen kann erreicht werden, wenn die Benutzer die erhaltenen Daten zur Durchführung des Computerspiels bearbeiten und an die entsprechenden Rechnereinheiten zurück übertragen.

Außerdem kann das erfindungsgemäße System für ein Computerspiel zusätzlich Einrichtungen zur Erfassung vorbestimmter Parameter der Datenübertragung zwischen den Rechnereinheiten und den jeweils damit verbundenen Benutzern aufweisen, um den Datenzugriff und die Datenverwaltung zusätzlich zu optimieren. Vorzugsweise umfassen diese vorbestimmten Parameter die Übertragungsdauer, und/oder die Fehlerrate, und/oder die Dauer von Datenbearbeitungen der einzelnen Rechnereinheiten und/oder der einzelnen Benutzern vor der Übertragung der Daten.

Somit können die Daten zur Durchführung des Computerspiels auch in Abhängigkeit der ermittelten vorbestimmten Parameter der Datenübertragung zwischen den Rechnereinheiten und den jeweils damit verbundenen Benutzern redundant gespeichert werden.

Des weiteren können die Rechnereinheiten von den entsprechenden Benutzern Steuerdaten zur Durchführung des Computerspiels erhalten, um verbesserte Interaktionen der einzelnen Benutzer zu ermöglichen.

Diese Steuerdaten oder diesen entsprechende Daten können dann von den Rechnereinheiten an die Datenspeichereinrichtungen ausgeben werden. Auf diese Weise wird es möglich, daß die Rechnereinheiten in Abhängigkeit der Steuerdaten Daten zur Durchführung des Computerspiels bearbeiten, und/oder die Datenspeichereinrichtungen in Abhängigkeit der Steuerdaten oder der den Steuerdaten entsprechenden Daten Daten zur Durchführung des Computerspiels bearbeiten, wodurch ein effizienterer Datenzugriff und eine effizienterer Datenverwaltung erreicht wird.

In vergleichbarer Weise werden bei dem erfindungsgemäßen Verfahren gemäß Anspruch 30 Daten in wenigstens zwei von wenigstens zwei Datenspeichereinrichtungen in Abhängigkeit von ermittelten Parameter der Datenübertragung zwischen den Datenspeichereinrichtungen und Rechnereinheiten redundant gespeichert, wobei der Zugriff auf die gespeicherten Daten durch die Rechnereinheiten in Abhängigkeit von den ermittelten Parameter der Datenübertragung erfolgt.

Vorzugsweise wird der Datenzugriff und die Datenverwaltung von den Datenspeichereinrichtungen gesteuert.

Bei einer Ausführungsform des erfindungsgemäßen Verfahrens werden die redundant gespeicherten Daten in Abhängigkeit von den ermittelten Parametern von Datenübertragungen zwischen den einzelnen Datenspeichereinrichtungen und der Rechnereinheit von den Datenspeichereinrichtungen untereinander kopiert und in den Datenspeichereinrichtungen gelöscht, in denen die kopierten Daten zuvor gespeichert waren.

Außerdem ist es möglich, die gespeicherten Daten von den Datenspeichereinrichtungen unabhängig von der Rechnereinheit zu bearbeiten, um einzelne Einrichtungen zu entlasten und eine erhöhte Betriebssicherheit des erfindungsgemäßen Verfahrens zu erreichen.

Um eine anwendungsspezifische und somit optimierte Speicherung der Daten zu ermöglichen, können die Daten in Datenteilmengen unterteilt werden, wobei die redundant zu speichernde der Datenteilmengen jeweils in den Zellen der einzelnen Datenspeichereinrichtungen gespeichert werden. Vorzugsweise wird das Unterteilen in Datenteilmengen und das Speichern in die Zellen in Abhängigkeit der Datenübertragungsparameter durchgeführt.

Eine weitere Optimierung kann erreicht werden, wenn zusätzliche Daten zum Datenzugriff und zur Datenverwaltung in den Zellen gespeichert werden, die die Parameter von Datenübertragungen zwischen den einzelnen Datenspeichereinrichtungen und der Rechnereinheit, und/oder benachbarte Zellen, und/oder Zellen betreffen, die die in dem System redundant gespeicherten Daten umfassen.

Darüber hinaus können zusätzliche Daten zum Datenzugriff und zur Datenverwaltung zwischen den Zellen der Datenspeichereinrichtungen ausgetauscht werden. Vorzugsweise weist das Zugreifen auf Daten von Zellen einer Datenspeichereinrichtung die gleichen Datenübertragungsparameter auf, um einen einheitlichen Datenzugriff für die einzelnen Datenspeichereinrichtungen zu gewährleisten.

Zur Entlastung des gesamten Systems können auch Daten von der Rechnereinheit zur Speicherung in den Datenspeichereinrichtungen ausgegeben und/oder die in den Datenspeichereinrichtungen gespeicherten Daten von der Rechnereinheit bearbeitet werden.

Vorzugsweise werden die Daten von der Rechnereinheit an einen Benutzer übertragen und/oder die Rechnereinheit wird von dem Benutzer gesteuert, um Daten unabhängig von der Durchführung des erfindungsgemäßen Verfahrens zu bearbeiten und den Ablauf des erfindungsgemäßen Verfahrens zusätzlich zu steuern. Somit können mit dem erfindungsgemäßen Verfahren Internetdienste zur Verfügung gestellt werden.

Um einen effizienteren Datenzugriff und eine effizientere Datenverwaltung zu erzielen, kann der Zugriff auch direkt auf die Daten einzelner Zellen der Datenspeichereinrichtungen erfolgen.

Außerdem ist zu bevorzugen, daß die Ermittlung der vorbestimmten Parameter von Datenübertragungen zwischen den einzelnen Datenspeichereinrichtungen und der Rechnereinheit die Ermittlung der Übertragungsdauer, und/oder der Fehlerrate, und/oder der Dauer von Datenbearbeitungen der einzelnen Datenspeichereinrichtungen vor der Übertragung der Daten umfaßt, um schneller und/oder sicherer auf Daten zuzugreifen.

Auf diese Weise ist es möglich ein Verfahren für ein Datenbanksystem oder eine Rechnerstruktur gemäß Anspruch 44 sowie ein Verfahren für ein Intemetcomputerspiel gemäß Anspruch 45 zur Verfügung zu stellen, wobei im letzteren Fall das Zugreifen auf Daten in den Datenspeichereinrichtungen vorzugsweise die Nutzung eines Internet-Service-Providers umfaßt.

Des weiteren kann das Verfahren es ermöglichen, daß hierbei wenigstens zwei Benutzer auf das Computerspiel zugreifen, wobei das Computerspiel ein interaktives Computerspiel ist.

Die Daten zur Durchführung des Computerspiels von den Rechnereinheiten können an die entsprechenden Benutzer übertragen werden. Vorzugsweise werden dann die von den Benutzern erhaltenen Daten von den Benutzern bearbeitet und an die entsprechenden Rechnereinheiten zurück übertragen, um die Rechnereinheiten und die Datenspeichereinrichtungen zu entlasten und die Durchführung des Computerspiels zu optimieren.

Bei einer weiteren Ausführungsform werden zusätzlich vorbestimmte Parameter der Datenübertragung zwischen den Rechnereinheiten und den jeweils damit verbundenen Benutzern ermittelt, um den Datenzugriff und die Datenverwaltung bei dem erfindungsgemäßen Verfahren auch unter Berücksichtigung dieser Parameter durchzuführen.

Des weiteren ist zu bevorzugen, daß die Ermittlung der vorbestimmten Parameter von Datenübertragungen zwischen den Rechnereinheiten und den jeweils damit verbundenen Benutzern die Ermittlung der Übertragungsdauer, und/oder der Fehlerrate, und/oder der Dauer von Datenbearbeitungen der einzelnen Rechnereinheiten und/oder der einzelnen Benutzern vor der Übertragung der Daten umfaßt.

Auf diese Weise kann die redundante Speicherung der Daten zur Durchführung des Computerspiels auch in Abhängigkeit der ermittelten vorbestimmten Parameter der Datenübertragung zwischen den Rechnereinheiten und den jeweils damit verbundenen Benutzern redundant durchgeführt werden.

Eine effizientere Durchführung von interaktiven Vorgängen des Computerspiels kann erzielt werden, wenn zusätzlich Steuerdaten zur Durchführung des Computerspiels von den Benutzern die entsprechenden Rechnereinheiten übertragen werden. Vorzugsweise werden die Steuerdaten oder entsprechende Daten von den Rechnereinheiten auch an die Datenspeichereinrichtungen übertragen werden.

Schließlich ist es möglich die Daten zur Durchführung des Computerspiels in Abhängigkeit der Steuerdaten von den Rechnereinheiten zu bearbeiten, und/oder die Daten zur Durchführung des Computerspiels in Abhängigkeit der Steuerdaten oder der den Steuerdaten entsprechenden Daten von den Datenspeichereinrichtungen zu bearbeiten. Auf diese Weise werden die einzelnen Benutzer entlastet und die redundant gespeicherten Daten werden von den Datenspeichereinrichtungen bearbeitet, die eine gewünschte Datenübertragung sicherstellen.

Durch ein erfindungsgemäßes Ersetzen einzelner ausgefallener Zellen ist es möglich Verbindungsfehler zu kompensieren und bei einem Ausfall einzelner Bereiche einer verteilten, vernetzten Rechnerstruktur Bereiche zu nutzen, die die Funktionalität der gesamten Rechnerstruktur beibehalten, indem Daten redundant in dem Rechnersystem vorliegen. Da die Erfindung eine Überwachung der verwendeten Daten ermöglicht, wird auf diese Weise auch die Konsistenz der verfügbaren Daten gewährleistet.

Des weiteren optimiert die Verwendung der vorliegenden Erfindung die Verbindungsgüte zwischen Clients und Daten bereitstellenden Einrichtungen einer Rechnerstruktur selbständig, so daß schlechte Übertragungsqualitäten (z.B. niedrige Übertragungsrate, Verzögerungen,...) automatisch kompensiert werden.

Hierzu werden einzelne Bereiche eines verteilten, vemetzten Rechnersystems, z.B. einzelne Speicherbereiche, ohne Unterbrechung des Betriebs skaliert. D.h. derartige einzelne Bereiche des erfindungsgemäßen Systems können zu jedem beliebigen Zeitpunkt hinzugefügt oder entfernt werden.

Außerdem ermöglicht die Erfindung, einzelne ausgefallene Bereiche eines vemetzten, verteilten Rechnersystems ohne Unterbrechung des Betriebs durch andere Bereiche zu ersetzen. Dies ist möglich, da die Erfindung keine zentrale Verbindung zwischen einzelnen Bereichen des Rechnersystems erfordert, wodurch Einschränkungen der Funktionalität des erfindungsgemäßen Systems aufgrund von Ausfällen (z.B. technischen Defekten) verhindert werden. Zusätzlich gewährleistet die Erfindung eine höhere Datensicherheit, da die Daten nicht zentral gespeichert werden.

Auch die Menge der von einzelnen Bereichen eines vemetzten, verteilten Rechnersystems zu verwaltenden Daten kann auf diese Weise reduziert werden. Das hat zur Folge, daß auch die erforderlichen Übertragungskapazitäten zwischen einzelnen Bereichen des erfindungsgemäßen Systems reduziert werden.

Außerdem können dem erfindungsgemäßen System weitere Komponenten hinzugefügt werden ohne dabei dessen grundsätzliche Struktur ändern zu müssen.

Der erfindungsgemäße Ansatz entstand zwar insbesondere bei der Lösung der oben genannten Problem bei der Umsetzung von (interaktiven) Computerspielen für das Internet. Es ist aber ausdrücklich zu betonen, daß die vorliegende Erfindung nicht auf derartige Anwendungen beschränkt ist, sondern ohne Einschränkung für jedes Rechnersystem und jede Rechnerstruktur anwendbar ist, die verteilte, vemetzte Einrichtungen nutzen, die Daten bereitstellen.

### Kurzbeschreibung der Zeichnungen

In der folgenden Beschreibung wird auf die beigefügten Zeichnungen Bezug genommen:
Fig. 1: Schematische Darstellung einer bevorzugten Ausführungsform einer Rechnerstruktur gemäß der vorliegenden Erfindung.
Fig. 2: Schematische Darstellung einer Datenstruktur sowie deren Unterteilung und Zuordnung zu Zellen gemäß der vorliegenden Erfindung.
Fig. 3: Schematische Darstellung einer weiteren bevorzugten Ausführungsform einer Rechnerstruktur gemäß der vorliegenden Erfindung.
Fig. 4: Schematische Darstellung eines Ausschnitts der bevorzugten Ausführungsform von Fig. 1, zur Erläuterung von Operationen, die zur Durchführung der Erfindung verwendet werden.

### Beschreibung bevorzugter Ausführungsformen der Erfindung

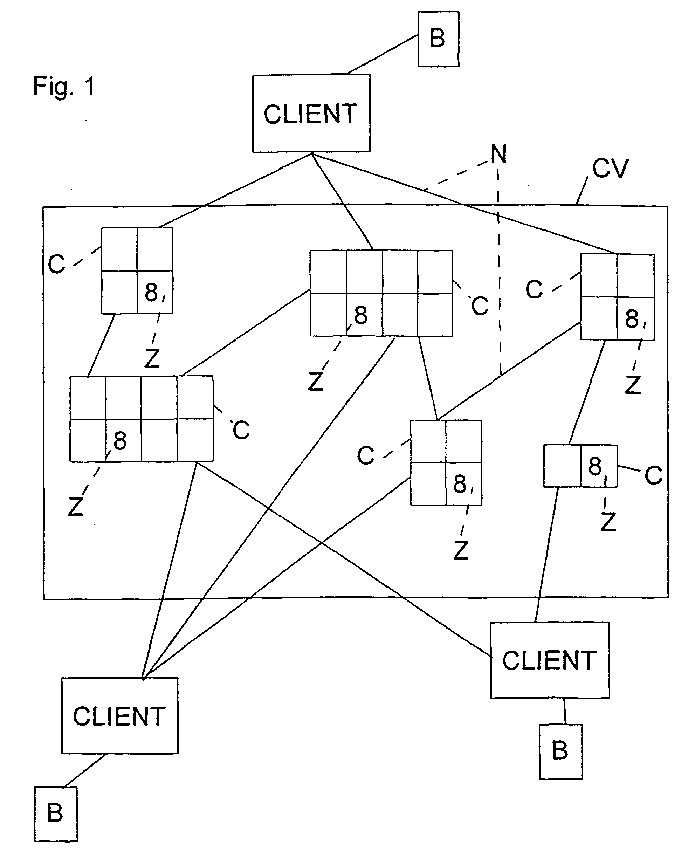

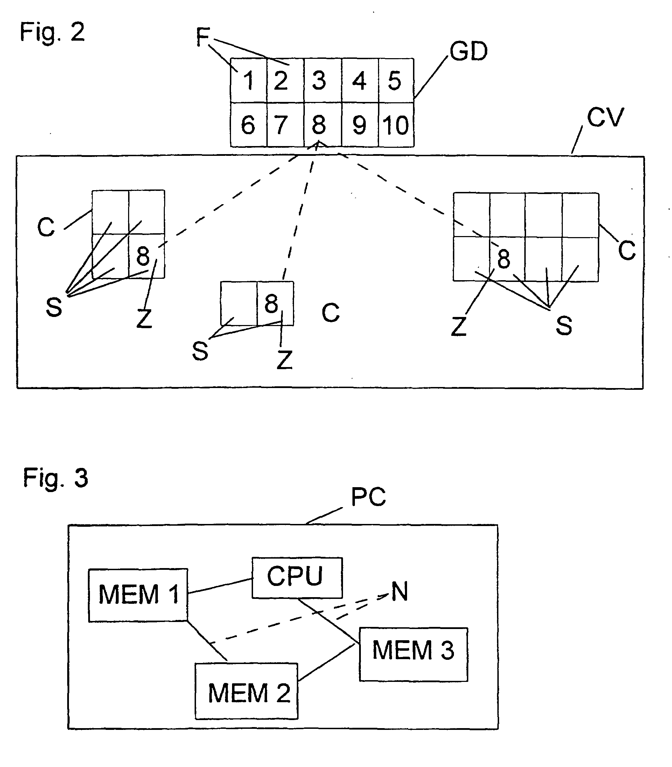

Die im folgenden Text verwendeten Begriffen werden hier unter Bezugnahme auf Fig. 1 und 2 erläutert.

Die gesamte Datenmenge GD, die in Verbindung mit der Erfindung verwendet wird, wird in einzelne Teildatenmengen unterteilt, die als Feld F bezeichnet werden.

Die Position jedes Felds F in der Gesamtdatenmenge GD wird durch eine eindeutige Feldposition oder Kennung FeldID beschrieben, wobei die Gesamtdatenmenge GD ein oder mehrdimensional aufgeteilt werden kann. Wird beispielsweise die Gesamtdatenmenge GD dreidimensional aufgeteilt, kann jede Feldposition FeldID durch x, y, z beschrieben werden.

Eine Zelle Z ist die kleinste Einheit zur Datenspeicherung, die genau ein Feld F speichert. Eine Zelle Z enthält auch weitere Informationen, auf die später im Einzelnen eingegangen wird.

Ein Cluster C besteht aus einer Zelle Z oder ist eine Ansammlung mehrerer Zellen Z. Ein Cluster C kann beispielsweise von einem einzelnen Rechner oder einem integrierten Schaltkreis gebildet werden, der einzelne oder mehrere Zellen Z verwaltet. Des weiteren kann ein Cluster C als übergeordnete Kontrolleinheit für die in ihm enthaltenen Zellen Z arbeiten.

Alle Cluster C, die zur Repräsentation des gesamten Datenbestandes GD zusammengefaßt werden, bilden einen Clusterpool oder Clusterverbund CV. Die einzelnen Cluster C sind über ein Netzwerk N verbunden, wobei jeder Cluster C eine eindeutige Adresse hat. So kann ein Clusterverbund CV durch Vernetzung einzelner, Cluster bildender Rechner und/oder Verschaltung einzelner, Cluster bildender integrierter Schaltkreise gebildet werden.

Innerhalb des Clusterverbandes wird jeder Cluster mit einer eindeutigen Kennung ClusterID identifiziert, die eine einzelne Nummer oder ein Tupel sein kann. Einzelne Cluster im Verband enthalten eine Tabelle ihrer Nachbarn (Nachbar- Tabelle), um Nachrichten an bestimmte Cluster weiterleiten zu können. Hierbei ist ein Nachbar ein anderer Cluster mit einer nächsten höheren oder niedrigeren Kennung ClusterlD.

Die Anzahl der Zellen Z, die zu einem Cluster C gehören, kann zwischen 0 und einer Obergrenze maxcc schwanken, wobei maxcc für jeden Cluster C im Clusterverbund CV verschieden sein kann. Die Anzahl der Zellen Z, die tatsächlich in einem Cluster C enthalten sind, wird mit ncc bezeichnet. Außerdem hat jede Zelle Z hat eine eindeutige Kennung ZeIIID innerhalb eines Clusters C.

Des weiteren können Zellen Z eines Clusters C Informationen untereinander austauschen ohne dabei Nachrichten über das Netzwerk N zu senden, wodurch eine sichere Nachrichtenübertragung innerhalb eines Clusters C ermöglicht wird. Zudem ist zu bevorzugen, daß alle Zellen Z eines Clusters C über die gleiche Verbindungsgüte verfügen, d.h. die Anbindung an das Netzwerk N kann zwar zwischen einzelnen Clustern C verschieden sein, ist jedoch für alle Zellen Z eines Clusters C gleich.

Wie beschrieben, umfaßt ein Cluster C zwischen 0 und maxcc Zellen Z. Jeder Speicherplatz eines Clusters C, der eine Zelle Z speichern kann, wird als Slot S bezeichnet. Ein Slot S kann voll sein, d.h. er speichert die Daten einer Zelle Z, oder leer sein, d.h. er repräsentiert keine Zelle Z. So weisen die Cluster C aus Fig. 2 jeweils nur einen vollen Slot S auf. Die Kennung SlotID jedes Slots S entspricht der Kennung ZeIIID, die eine Zelle Z an diesem Speicherplatz erhalten würde.

Ein Client CL (z.B. Internet-Provider, Personal Computer, Netzwerkrechner, o.ä.) ist eine über das Netzwerk N kommunizierende Einheit, die Daten anfordert, bearbeitet und/oder den Auftrag gibt, die geänderten Daten zu speichern. Bei der vorliegenden Erfindung wird keinerlei Annahme über die tatsächliche Realisierung des Netzwerkes N gemacht. Als Netzwerk N können beliebige Daten übertragende Einrichtungen zum Einsatz kommen, wie z.B. propritäre Busse, lokale Netzwerke oder das Internet. Auch wird bei der Erfindung nicht vorausgesetzt, daß das Netzwerk N die Übertragung aller Daten gewährleistet, weshalb auch Rückmeldungen über eine Datenübertragung an den entsprechenden Absender nicht erforderlich sind, und daß das Netzwerk N Daten entsprechend ihres Aussendezeitpunkts übermittelt.

Wie im folgenden und in Fig. 2 dargestellt, basiert die Erfindung unter anderem auf einer Verteilung der gesamten Daten GD bzw. der Felder F auf mehrere Zellen Z gleichen Inhalts, d.h. ein einzelnes Feld F wird in mehreren Zellen Z redundant gespeichert. Die Anzahl der Zellen Z, die ein bestimmtes Feld F speichern und verwalten, wird als nm bezeichnet und ist im gesamten Clusterverbund CV gleich, wobei jede dieser nm Zellen Z als Spiegel SP für das Feld F bezeichnet wird, das in den nm Zellen Z gespeichert ist. In der folgenden Erläuterung der Erfindung wird von nm=3 ausgegangen, wobei dieser Wert nur zur Veranschaulichung der Erfindung dient und spezifisch für jeden Anwendungsfall der Erfindung zu wählen ist.

Eine Antwort AK ist die Antwort auf eine Anfrage RQ. Welchen Inhalt und Funktion die einzelnen Anfragen RQ und Antworten AK haben, hängt von den jeweils übertragenen Daten ab.

Eine Nachricht MSG ist eine Datenmenge, die zwischen Zellen Z, Clustem C und Clients CL ausgetauscht wird. Es ist Aufgabe des Netzwerks N die Nachrichten MSG zu übertragen. Da der Absender einer Nachricht MSG keine Rückmeldung über eine erfolgreiche Übertragung erhält, können Nachrichten MSG verloren gehen. Auch können zwei Nachrichten MSG nach unterschiedlicher Zeitdauer bei einem Ziel ankommen. Es werden nun die grundsätzliche Vorgehensweise bei der vorliegenden Erfindung und einzelne Vorgänge bzw. Operationen zu Durchführung der Erfindung beschrieben.

Die gesamte Datenmenge GD wird in einzelne Felder F aufgeteilt. Eine solche Aufteilung kann beispielsweise zwei- oder dreidimensional erfolgen. Zum Beispiel könnte man ein Schachbrett in 8*8 Felder F aufteilen, wobei jedes Feld F dann die Information über das entsprechende Schachbrettfeld enthalten würde, z.B. welche Spielfigur dort steht. Analog läßt sich auch ein 3-dimensionaler Raum durch Felder F darstellen. Es ist aber auch möglich, ein Bild in einzelne Bildbereiche oder einen Text in einzelne Wörter oder Buchstaben(-folgen) zu unterteilen und einzelnen Feldern F zuzuordnen. Der Inhalt der Felder F ist anwendungsspezifisch und spielt bei der vorliegenden Erfindung keine Rolle.

Die einzelnen Felder F werden dann in nm Zellen Z gespeichert, wobei jede Zelle Z ein entsprechendes Feld F, d.h. die eigentlichen Daten, sowie weitere Informationen speichert, die vorzugsweise Verweise auf benachbarte Felder F betreffen. Diese Informationen erlauben eine Datenreduktion, da so "leere" Felder F nicht gespeichert werden müssen und nicht jedem Feld F eine Zelle Z zugeordnet werden muß.

Mehrere Zellen Z werden danach zu einem Cluster C und alle Cluster C wiederum zu einem Clusterverbund CV zusammengefaßt. Ein wesentliches Merkmal der Erfindung ist es, daß jede Zelle im Clusterverbund CV redundant vorhanden ist, nämlich nm-mal in nm Clustern C. Somit wird jedes Feld F in diesen Zellen Z nm-mal gespeichert und jede dieser Zellen Z wird als Spiegel SP hinsichtlich des darin gespeicherten Feldes F bezeichnet. Außerdem enthält jede Zelle Z auch Informationen darüber, in welchen Clustern C und/oder in welchen Zellen Z der entsprechenden Cluster C die anderen nm-1 Zellen Z liegen.

Des weiteren enthält jede Zelle Z noch weitere Informationen, die vorzugsweise Angaben über die Datenübertragungsqualität in dem Clusterverbund CV und zu den Clients CL umfassen, z.B. Übertragungsgüte, Übertragungsgeschwindigkeit, o.ä.. Diese Informationen werden aktualisiert, wenn auf die Zellen Z zugegriffen wird.

Um den Inhalt eines Feldes F zu erhalten, sendet ein Client CL eine Anfrage über das Netzwerk N an alle Zellen Z und/oder Cluster C, die das gewünschte Feld F beinhalten, d.h. an alle Zellen Z, die Spiegel SP des gewünschten Felds F sind. Von welcher Zelle Z oder welchem Cluster C der anfragende Client CL eine Antwort erhält, hängt von den Parametern der Datenübertragungen zu einzelnen Zellen Z und/oder Clustem C sowie zurück zu den Clients CL ab. Vorzugsweise erhält der anfragende Client CL von der Zelle Z und/oder dem Cluster C eine Antwort, die zum jeweiligen Zeitpunkt die schnellste Datenübertragung realisieren und/oder eine Bearbeitung der Daten vor ihrem Versenden an den anfragenden Client CL schneller durchführen können.

Alle Zellen Z und/oder Cluster C und/oder Clients CL überprüfen regelmäßig die für sie gültigen Parameter für Datenübertragungen. In regelmäßigen Abständen oder im Anschluß an festgelegte Aktionen prüfen alle Zellen Z und/oder Cluster C und/oder Clients CL regelmäßig die für die verwendeten Zellen Z gültigen Parameter für Datenübertragungen. Entsprechen die überprüften Parameter vorgegebenen Grenzwerten nicht oder weisen andere Zellen Z und/oder Cluster C bessere Datenübertragungensparameter auf, werden die prüfenden Zellen Z versuchen, ihre Daten auf diese anderen Zellen Z und/oder anderen Cluster C zu verlagern, um die für diese Daten gültigen Parameter für Datenübertragungen zu verbessern. Auf diese Weise optimiert sich der erfindungsgemäße Clusterverbund CV in Hinblick auf Datenübertragungen während des Betriebs selbständig.

Bestimmte Anfragen eines Clients CL, wie z.B. eine unten beschriebene Schreibanfrage WriteRQ, werden zwischen allen Spiegeln SP des jeweiligen Felds F synchronisiert. Dadurch werden ausgefallene Spiegel SP identifiziert. Zusätzlich werden in regelmäßigen Abständen und/oder durch Clients CL nach Erhalt von Antworten AK zusätzliche Prüfungen ausgeführt. Auch dadurch werden ausgefallene und/oder nicht mehr aktuelle Spiegel SP identifiziert. Diese Spiegel SP werden entweder von anderen Spiegeln SP ersetzt oder es werden von einer Zelle Z oder einem Cluster CL oder einem Client CL ersatzweise neue Spiegel SP erzeugt oder die vorliegenden Fehler werden mit unten beschriebenen Methoden behoben. Somit ist der Clusterverbund CV gegen den Ausfall einzelner Zellen Z und/oder ganzer Cluster C fehlertolerant Außerdem können anfragende Clients CL einzelnen Zellen Z und/oder Clustern C spezielle Datenbearbeitungsfunktionen bzw. -aufgaben zuweisen, die unabhängig von der Wirkungsweise der Clients CL ablaufen. Beispielsweise kann ein Client CL eine Zelle Z oder einen Cluster C anweisen, die Daten eines Feld F in bestimmten Intervallen zu ändern. Dieses Merkmal ist von besonderer Bedeutung, wenn die vorliegende Erfindung in Verbindung mit Computerspielen verwendet wird, die über ein Netzwerk, z.B. das Intemet, in Echtzeit durchgeführt werden, um die zu übertragenden Datenmengen zu reduzieren und die interaktiven Vorgänge bei der Durchführung eines Computerspiels zu optimieren.

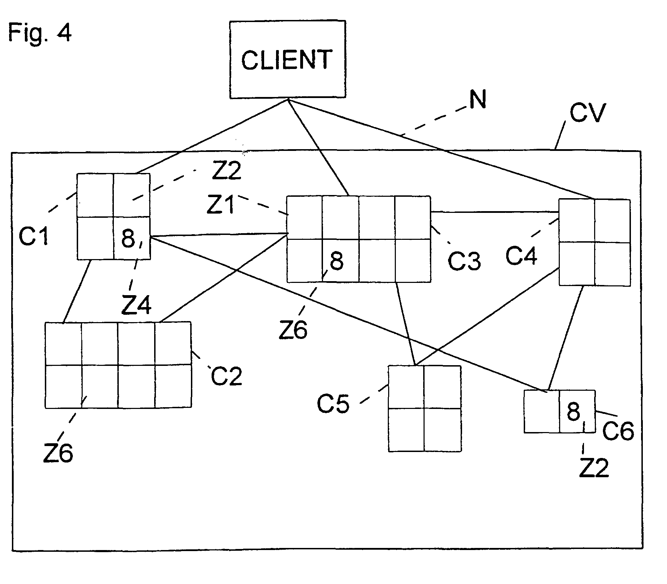

Daten zwischen den einzelnen Clients CL, Clustern C und Zellen Z werden unter Verwendung eines vorbestimmten Protokolls übertragen. D.h. zusätzlich zu den übertragenden Daten werden von den einzelnen Clients CL, Clustern C und Zellen Z weitere vorbestimmte Daten ausgesendet und empfangen, um, wie unten beschrieben, gewünschte Vorgänge einzuleiten und in gewünschter Weise zu reagieren. So führen alle Clients CL, Cluster C und Zellen Z die notwendigen Operationen durch, um die gewünschte Funktionalität des entsprechenden Clusterverbund CV zu erreichen. Wird die Erfindung verwendet, wie in Fig. 1 gezeigt, um Computerspiele über das Internet zur Verfügung zu stellen, ist das Netzwerk N das Internet und der Client CL das Rechnersystem, das als Intemet-Provider arbeitet. Die einzelnen Cluster C umfassen hier Speichereinheiten des Clients CL und Speichereinrichtungen anderer über das Internet verteilter Rechnersysteme. Da im allgemeinen nur eine einzige Verbindung zwischen einem Client CL (Internet-Service-Provider) und einem entsprechenden Benutzer B besteht, üblicherweise über eine Telefonleitung, bilden zur Zeit der Benutzer B und der Client CL (Internet-Provider) ein als einheitlich anzusehendes System. Daher ist in Fig. 4 der Benutzer B aus Fig. 1 nicht dargestellt. Eine erfindungsgemäße Optimierung der Datenübertragung zu den Benutzern B wäre nur möglich, wenn der Benutzer B zeitgleichen Zugriff auf verschiedene Internet-Provider hätte. Bei dem derzeitigen Stand der Technik erlaubt die vorliegende Erfindung aber eine Optimierung der Datenverwaltung und -übertragung für als Internet-Provider arbeitende Clients CL, wenn diese auf die z.B. für ein interaktives Computerspiel mit mehreren Spielern erforderlichen Daten über das Internet auf andere als Cluster arbeitende Rechnersysteme zugreifen. Die Erfindung kann auch wie in Fig. 3 gezeigt in einer einheitlichen Rechnerstruktur verwendet werden, wie zum Beispiel in einem Personal Computer PC. In diesem Fall arbeitet die zentrale Recheneinheit CPU als Client und die verschiedenen datenverwaltenden Einrichtungen MEM1, MEM2, MEM 3 als Cluster. Die datenverwaltenden Einrichtungen MEM1, MEM2, MEM 3 können herkömmliche Speichereinheiten, z.B. nicht flüchtige Speicher oder Speicher mit wahlfreien Zugriff, aber auch spezielle Einrichtungen sein, die z.B. Daten nicht nur speichern, sondern auch bearbeiten und somit die Daten der zentralen Recheneinheit CPU nicht immer uneingeschränkt zur Verfügung stellen können.

Eine Zelle Z kann fünf Zustände annehmen, wobei jeder Zustand immer eintreten kann, da die Zellen Z nicht ausfallsicher sind und das Netzwerk N keine Datenübertragungen gewährleistet und überprüft:

Aktiver Zustand (active): Der Inhalt der Zelle Z ist gültig und die Zelle Z ist betriebsbereit. Ungültiger Zustand (invalid): Die Zelle Z ist betriebsbereit, hat aber einen nicht mehr aktuellen gültigen Inhalt. Dies kann z.B. auftreten, wenn die Zelle Z Datenoperationen aufgrund eines technischen Defekts oder nicht erhaltener Informationen nicht ausgeführt hat.

Inaktiver Zustand (inactive): Die Zelle Z ist nicht erreichbar, z.B. weil Datenübertragungen dorthin permanent verloren gehen oder die Zelle Z dauerhaft ausgefallen ist.

Blockierter Zustand (blocked): Die Zelle Z verarbeitet nur bestimmte Datenübertragungen, wie z.B. nur die unten beschriebenen Schreibanfragen WriteRQ oder Leseanfragen ReadRQ.

Leerlauf (idle): Die Zelle Z ist betriebsbereit, wird aber in dem Clusterverband CV zur Zeit nicht genutzt.

Eine Zelle Z enthält ein bestimmtes Feld F, also ein Feld F mit einer bestimmten Feldposition FeldID, und hat eine eindeutige Position ZeIIID innerhalb des entsprechenden Clusters C. Der Cluster C ist wiederum durch eine eindeutige Kennung ClusterID gekennzeichnet. Somit wird eine Zelle Z durch eine Kennung mit der Form ClusterID:ZeIIID eindeutig gekennzeichnet. Jeder Cluster C und jeder Client CL ist im Clusterverbund CV jeweils durch eine Kennung ClusterlD, ClientID eindeutig gekennzeichnet. Besondere Anforderungen werden an diese Kennungen nicht gestellt, sie müssen die Cluster C und Clients CL nur eindeutig kennzeichnen.

Im folgenden werden eine Reihe von Algorithmen beschrieben näher erläutert, die von den weiter unten beschriebenen funktionalen Operationen genutzt werden, die zur Durchführung der Erfindung dienen. Diese Erläuterung wird durch entsprechende Pseudocodes ergänzt, die in der derzeit bevorzugten Ausführungsform der Erfindung verwendet werden.

Damit Nachrichten MSG, d.h. Datenübertragungen, einzelnen Vorgängen eindeutig zugeordnet werden können, enthält jede Nachricht MSG eine Ticketnummer TNr, die beim Absenden erzeugt wird. Solange der entsprechende Vorgang nicht abgeschlossen ist, können alle beteiligten Clients CL, Zellen Z und Cluster C die Nachricht MSG dem entsprechenden Vorgang anhand der Ticketnummer TNr eindeutig zuordnen. Um eindeutige Ticketnummern TNr zu erhalten, kann eine Ticketnummer TNr beispielsweise aus der Absendezeit der Nachricht (oder aus einem in der Zelle generierten fortlaufenden Zähler) und der Absenderkennung kombiniert werden. Da die Absenderkennung eindeutig ist und die Sendezeiten von zwei Nachrichten MSG unterschiedlich sind, kann jede Nachricht MSG eindeutig dem jeweiligen Vorgang zugeordnet werden. Eindeutige Ticketnummem TNr können aber in Abhängigkeit der unterschiedlichsten Anwendungen der Erfindung auf andere Weisen erzeugt werden.

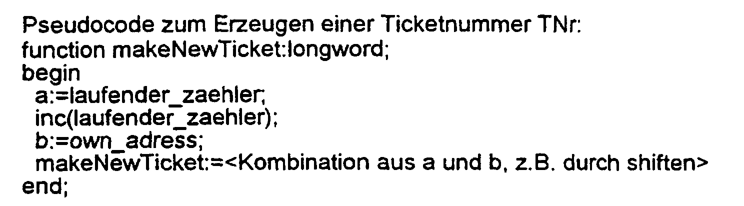

Empfängt ein Cluster C eine Nachricht MSG, die an einen anderen Cluster C gerichtet ist, d.h. die ClusterID der Zieladresse der Nachricht MSG entspricht nicht der Adresse des empfangenden Clusters C, so leitet der empfangende Cluster C die Nachricht MSG an den Cluster C weiter, für den die Nachricht MSG bestimmt ist. Wie die Nachricht MSG weitergeleitet wird, hängt von der tatsächlichen Realisierung des Netzwerks N und/oder der Cluster C und/oder Clients CL und/oder des Datenübertragungsprotokolls und/oder von entsprechenden, in der Nachricht MSG enthaltenen Daten ab. Ebenso wird eine Nachricht MSG weitergeleitet, wenn eine Zelle Z die Nachricht MSG erhält, die für eine andere Zelle Z bestimmt ist.

Jede Zelle Z enthält Informationen über benachbarte Zellen Z und prüft anhand dieser Informationen, ob sich eine gewünschte Zelle Z innerhalb des aktuellen Clusters C befindet. Wenn dies nicht der Fall ist, wird vorzugsweise von allen benachbarten Zellen Z des aktuellen Clusters C die Zelle Z ausgewählt, die der gewünschten Zelle Z am benachbartesten liegt. Kommen hierfür mehrere Zellen Z in Frage, kann eine Zelle Z zufällig ausgewählt werden.

Optional kann bei jedem Weiterreichen einer Nachricht MSG ein Schrittzähler um einen Schritt erhöht werden. Bei jedem Schritt sendet der jeweilige Cluster C eine Halteantwort HalteAK an den Absender der Nachricht MSG, um diesem anzugeben, daß seine Anfrage RQ noch bearbeitet wird. Empfängt in diesem Fall der Absender eine derartige Halteantwort HalteAK nicht, kann der Absender davon ausgehen, daß seine Nachricht MSG verloren gegangen ist. Der Absender kann dann seine Nachricht MSG zum Beispiel an den letzten Cluster C richten, der die zuletzt empfangene Halteantwort HalteAK gesendet hat.

Eine sichere Methode, Nachrichten MSG zu übermitteln und zu garantieren, daß die Nachrichten MSG empfangen wurden, gibt es nicht, da das Netzwerk N Datenübertragungen nicht garantieren muß und somit jederzeit Nachrichten MSG (z.B. Anfragen RQ und Antworten AK) verloren gehen können.

Um für bestimmte Daten deren Übertragung in höherem Maße zu gewährleisten, kann eine pseudosichere Nachricht PSM verwendet werden. Hierbei wird die pseudosichere Nachricht PSM so oft gesendet, bis ein Nachrichtenverlust unwahrscheinlich ist. Erst danach wird davon ausgegangen, daß die Übertragung fehlgeschlagen ist.

Geht man von einer Wahrscheinlichkeit von 1/n aus, mit der eine beliebige Nachricht MSG verloren gehen kann, so muß eine pseudosichere Nachricht PSM so x-mal gesendet werden, so daß die Wahrscheinlichkeit p=(2/n)^x hinreichend klein ist, mit der die Nachricht verloren gegangen ist. Dann kann man bei fehlender Antwort AK davon ausgehen, das der Empfänger ausgefallen ist.

Pseudocode zum Versenden einer pseudosicheren Nachricht PSM: procedure psm_send(message:TCellMsg; d1,d2,d3;Tadr; next_status:TCellStatus); var i:byte;

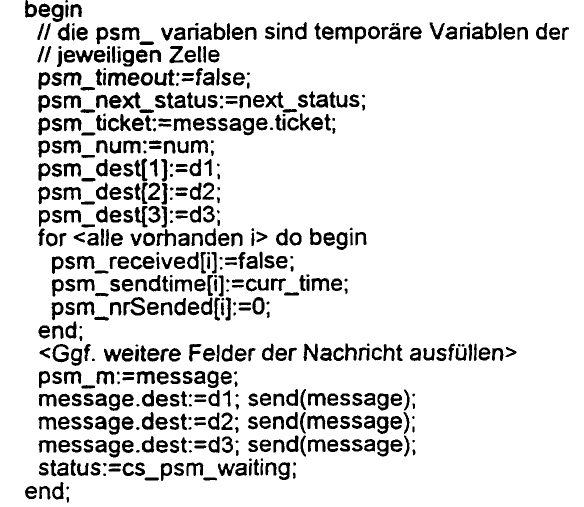

Um zu prüfen ob eine Zelle auf die Bestätigung einer pseudosicheren Nachricht PSM wartet, wird folgender Pseudocede verwendet:
<Behandle falls Zelle auf PSM- Eingang wartet>

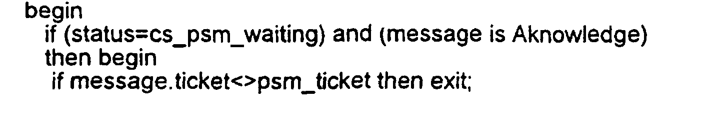

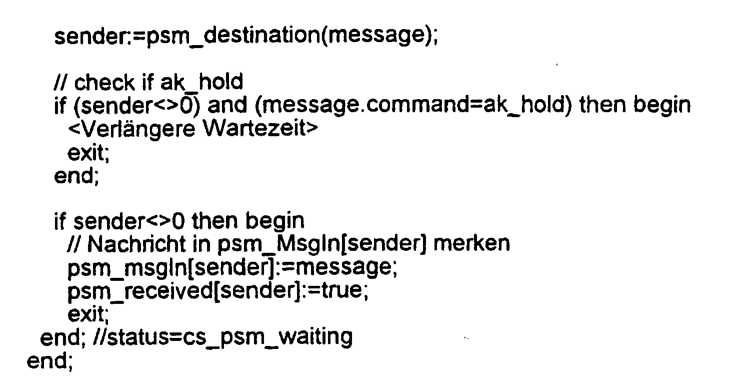

Die entsprechende Zelle Z muß prüfen, ob alle Anworten AK eingegangen sind, wenn sie ihre update-Prozedur durchführt. Dort muß der entsprechende Status (cs_psm_waiting) behandelt werden. Dabei ist zu entschieden, ob alle Antworten AK eingegangen sind und, wenn nicht, ob noch länger gewartet werden soll:

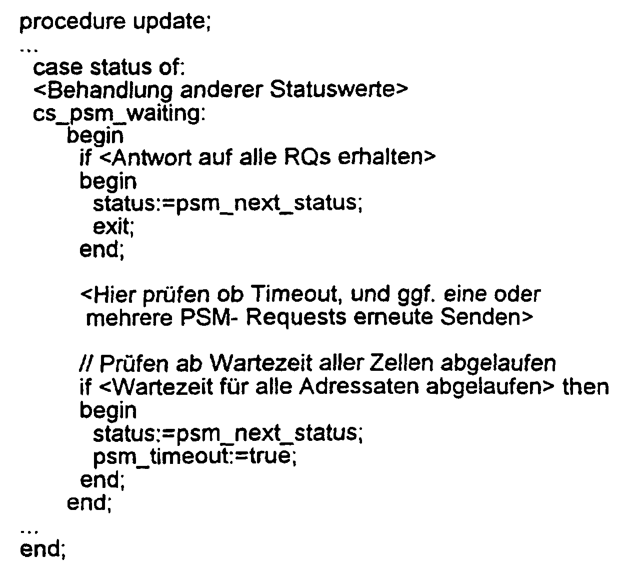

Der Selbsttest ist die zentrale Operation, um die Konsistenz aller Spiegel SP eines Verbundes für ein Feld F sicherzustellen. Ein Selbsttest wird durch einen anfragenden Dritten, z.B. einen Client CL oder Cluster C ausgelöst. Ein Spiegel SP, der einen Selbsttest durchführt, bewirkt, daß die anderen Spiegel SP des Verbundes ebenfalls einen Selbsttest durchführen. Wenn ein Spiegel SP einen Selbsttest durchführt, kann dies dazu führen, daß dieser oder ein anderer Spiegel SP eine Fehlerkorrektur durchführt. Je nachdem wie unsicher das Netz tatsächlich ist (Verlust von Nachrichten, Lags) kann es unpraktikabel sein, die PSM tatsächlich sicher zu gestalten. Die einzelnen Operationen (wie Hinzufügen eines neuen Mirrors usw.) sollten bis zu einem gewissen Grad tolerant gegenüber Fehlern sein. Der Fall, daß eine Nachricht zwar als nicht geliefert klassifiziert wird, aber trotzdem geliefert wurde, ist mit PSM zwar sehr unwahrscheinlich, aber nicht unmöglich. Es muß daher entsprechende Fehlerkorrekturen geben.

Erhält ein Spiegel SP eine Selbsttestanfrage SelbsttestRQ, beginnt er unter derselben Ticketnummer TNr einen Selbsttest durchzuführen, sofern er nicht gerade einen Selbsttest durchführt, der durch eine andere Selbsttestanfrage SelbsttestRQ initialisiert wurde, und wenn die Ticketnummer TNr der aktuell erhaltenen Selbsttestanfrage SelbsttestRQ sich von der letzten erhaltenen Selbsttestanfrage SelbsttestRQ unterscheidet.

Sendet ein anfragender Dritter z.B. eine unten beschriebene Leseanfrage LeseRQ aus, ist die Durchführung eines Selbsttest nur dann notwendig, wenn der anfragende Dritte inkonsistente Antworten AK von den entsprechenden Spiegeln SP eines Felds F erhält, das der anfragende Dritte zu lesen beabsichtigt.

Der anfragende Dritte vergleicht die von den Spiegeln SP erhaltenen Antworten AK und - geht man wie oben beschrieben von drei Spiegeln SP für ein Feld F aus - akzeptiert bei drei Antworten AK das Ergebnis. Bei zwei Antworten AK löst er einen Selbsttest aus und akzeptiert das Ergebnis. Bei nur einer Antwort AK löst er einen Selbsttest aus und verwirft das Ergebnis.

Ist eine Selbsttestanfrage SelbsttestRQ empfangen worden oder ist ein Selbsttest durch andere systembedingte Vorgaben, z.B. eine Zeitüberschreitung, ausgelöst worden, muß der entsprechende Spiegel SP seine eigene Gültigkeit prüfen und ist entweder selbst für die Fehlerkorrektur zuständig oder gibt den Auftrag zu Fehlerkorrektur an einen anderen Spiegel SP. Bei der Auswahl eines Spiegels SP zur Fehlerkorrektur ist anzustreben, daß immer nur ein Spiegel SP die Fehlerkorrektur durchführt, auch wenn mehrere Spiegel SP quasi gleichzeitig einen Selbsttest durchführen, um inkonsistente Zustände zu vermeiden.

Hierbei sendet der Spiegel SP an alle anderen Spiegel SP eine Validieranfrage ValidierRQ. Der Austausch der entsprechende Daten findet unter Verwendung von pseudosicheren Nachrichten PSM statt. Wird keine Antwort AK empfangen, wird das Ziel als nicht erreichbar deklariert. Danach wird der ausgefallene Spiegel SP durch einen neuen ersetzt.

Pseudocode zur Durchführung eines Selbsttests SelbstestRQ:
Ein Spiegel beginnt mit einen Selbsttest, wenn er eine entsprechende Nachricht dazu erhält:

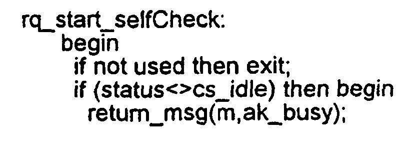

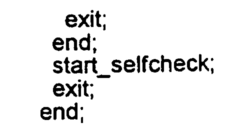

Alternativ oder ergänzend dazu kann der Selbsttest auch in bestimmten Intervallen automatisch durchgeführt werden. Dazu sendet der prüfende Spiegel SP an alle anderen Spiegel SPeine entsprechende Anfrage:
procedure start_selfCheck;
var m:TCellMsg;

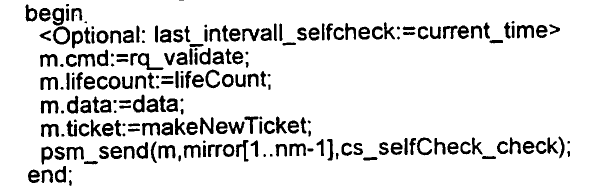

Dabei muß jede Zelle Z in der Lage sein, auf Validieranfragen antworten zu können:

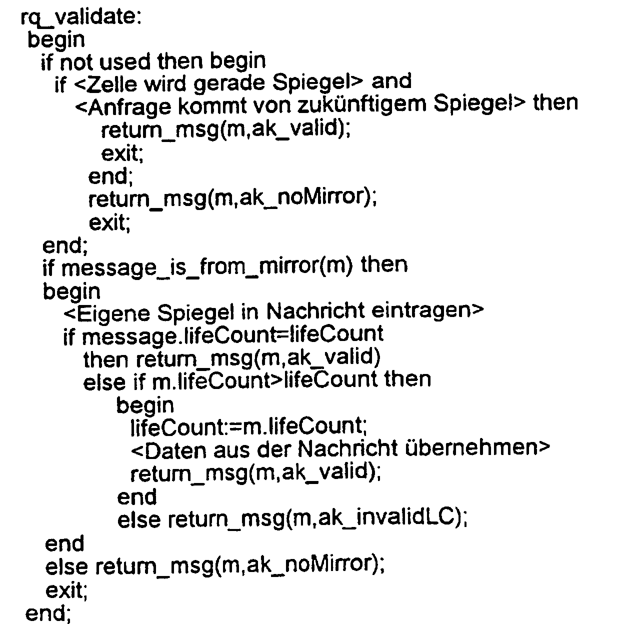

Nachdem die prüfende Zelle Z entweder alle Antworten AK erhalten hat, oder die Zeit abgelaufen ist, überprüft sie das Ergebnis des Selbsttest:

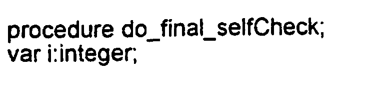

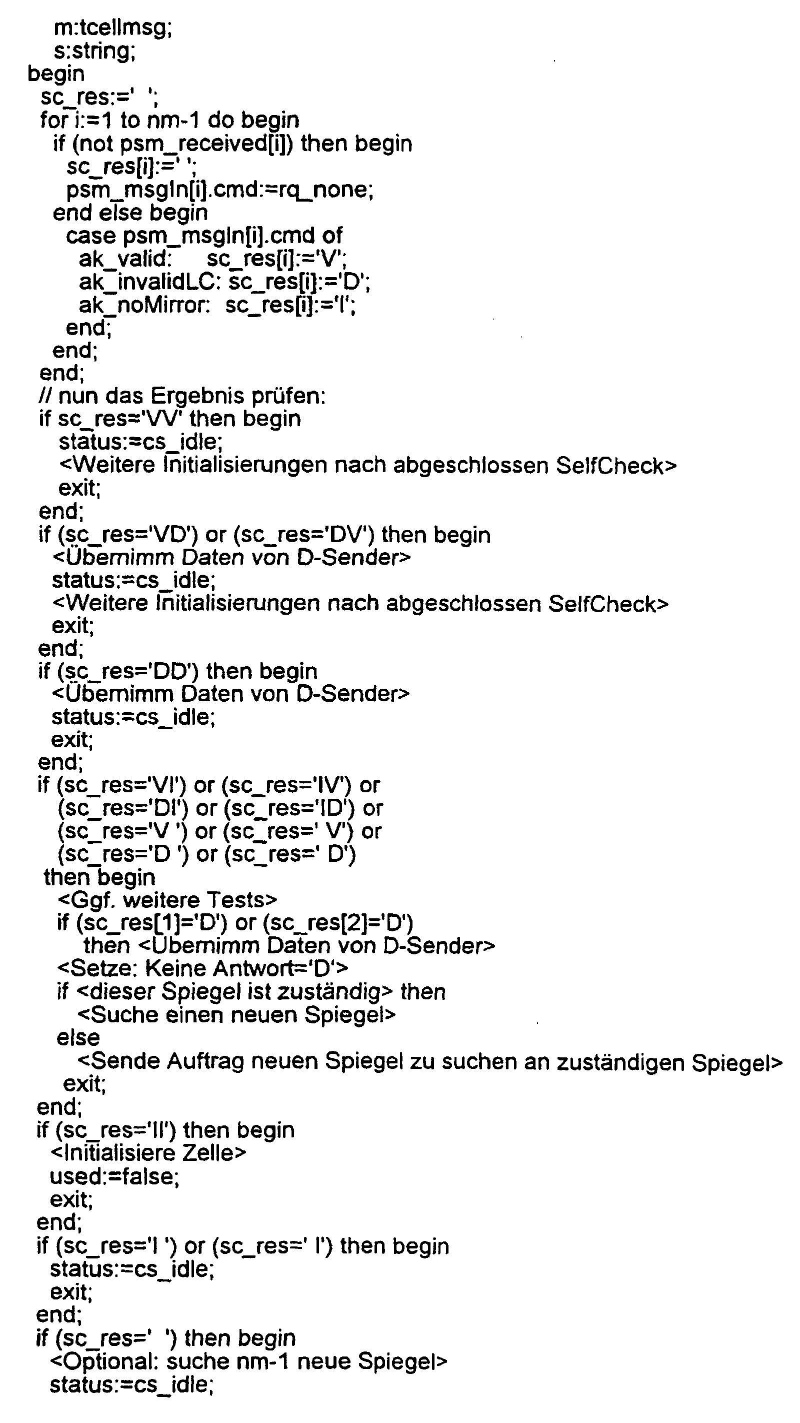

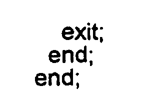

Ausgehend von einem Spiegelverbund mit drei Spiegeln SP lassen sich für einen Eingang von keiner, einer oder zwei Antworten AK bei dem Spiegel SP, der Validieranfragen ValidierRQ an die anderen beiden Spiegel SP des Verbundes sendet, folgende Fälle unterscheiden, die in der unten stehenden Tabelle aufgeführt sind, wobei die eingehenden Anworten AK wie folgt klassifiziert werden:

"V" (Valid): Der sendende Spiegel SP akzeptiert die empfangende Zelle Z als Spiegel SP, und die Lebensdauerzähler des Absenders und Empfängers haben den gleichen Wert.

"D" (Delayed): Der sendende Spiegel SP akzeptiert die empfangende Zelle Z als Spiegel SP, aber der Lebensdauerzähler des Absenders hat einen niedrigeren Wert als der Lebensdauerzähler des Empfängers.

"I" (Invalid): Der sendende Spiegel SP akzeptiert die empfangende Zelle Z nicht als Spiegel SP.

| Fall | Eingehende Antworten AK | Zustand des Spiegelverbundes |
|---|---|---|
| (1) | V V | Beide empfangenden Spiegel SP sind gültig: Die Spiegel des Verbundes weisen konsistente und aktuelle Daten auf, weshalb keine weiteren Operationen erforderlich werden. |
| (2) | V D | Der angefragte, ein "V" sendende Spiegel SP ist gültig und der angefragte, ein "D" sendende Spiegel SP hat einen Lebensdauerzähler mit höherem Wert: Der anfragende Spiegel SP muß die Daten des angefragten, "D" sendenden Spiegels SP übernehmen. |
| (3) | D D | Beide empfangenden Spiegel SP haben Lebensdauerzähler mit höherem Wert: Der sendende Spiegel SP ist ungültig und muß die Daten der angefragten, "D" sendenden Spiegel SP übernehmen. |
| (4) | VI | a) Der angefragte, ein "V" sendende Spiegel SP erhält ein "I" von dem angefragten, ein "I" sendenden Spiegel SP: Der anfragende Spiegel SP und der angefragte, ein "V" sendende Spiegel SP sind gültig, der angefragte, ein "I" sendende Spiegel SP ist ungültig und aus dem Verbund zu entfernen. Der Spiegel SP mit dem niedrigsten Index muß einen neuen Spiegel SP suchen. |
| | | b) Der angefragte, ein "V" sendende Spiegel SP erhält ein "V" von dem angefragten, ein "I" sendenden Spiegel SP: Der angefragte, ein "I" sendende Spiegel SP ist inkonsistent und muß aus der Gruppe entfernt werden (siehe detaillierte Erläuterung in folgenden). Der Spiegel SP mit dem niedrigsten Index muß einen neuen Spiegel SP suchen. |
| (5) | D I | Der anfragende Spiegel SP übernimmt die Daten des ein "D" sendenden Spiegels SP. Ansonsten entspricht das Vorgehen dem Fall (4). |
| (6) | II | Der anfragende Spiegel SP ist in der Minderheit und wird für ungültig erklärt. |
| (7) | V- | Ein angefragter Spiegel kann keine Daten übermitteln: Der Spiegel SP der beiden arbeitenden Spiegel SP mit niedrigeren Index muß einen neuen Spiegel SP suchen. Der ausfallene Spiegel SP wird wie ein ein "I" sendender Spiegel SP im den Fällen (4) und (5) behandelt. |
| (8) | D- | Ein angefragter Spiegel kann keine Daten übermitteln und der andere angefragte Spiegel SP hat einen Lebensdauerzähler mit einem höheren Wert: Der anfragende Spiegel SP übernimmt den Daten des arbeitenden angefragten Spiegels SP und der Spiegel SP mit niedrigeren Index muß einen neuen Spiegel SP suchen. Der ausfallene Spiegel SP wird wie ein ein "I" sendender Spiegel SP im den Fällen (4) und (5) behandelt. |
| (9) | I- | Ein angefragter Spiegel SP ist ungültig und der andere angefragte Spiegel SP ist ausgefallen: Der anfragende Spiegel SP ist in der Minderheit, bleibt aktiv, aber sucht keine neuen Spiegel SP. |
| (10) | -- | Beide angefragten Spiegel SP übermitteln keine Daten oder die Netzverbindung des anfragenden Spiegels SP ausgefallen: Beide angefragten Spiegel SP übermitteln keine Daten oder die Netzverbindung des anfragenden Spiegels SP ausgefallen. Alternative 1: Der anfragende Spiegel SP bleibt aktiv, sucht aber keine neuen Spiegel SP. Alternative 2: Der anfragende Spiegel stellt durch zusätzliche Tests sicher, daß seine Verbindung korrekt arbeitet und ersetzt die beiden Spiegel. Die beiden angefragten Spiegel SP erhalten diesbezüglich keine Information und werden den anfragenden Spiegel SP später ausschließen. Dieser Fall muß durch einen unten beschriebene Operation DoubleFieldCheck abgefangen werden. |

In den Fällen, in denen ein neuer Spiegel SP zu suchen ist, wird ein neuer Spiegel SP von einem der verbleibenden Spiegel SP gesucht, wobei nur einer der Spiegel diese Aufgabe wahrnehmen darf. Hier muß ein Spiegel ausgewählt werden, zum Beispiel der mit dem niedrigeren Index. Der andere Spiegel SP mit dem höheren Index führt keine Operationen aus, wird aber nach einiger Zeit Nachrichten MSG erhalten, die die Eingliederung eines neuen Spiegels SP in den Verbund anzeigen.

Ist ein Spiegel SP im physikalischen Sinn ausgefallen, so ist es entweder möglich, daß in der Zwischenzeit keine Anfragen RQ an den Spiegelverbund gestellt worden sind, sein Ausfall also gar nicht bemerkt worden und auch ohne weitere Auswirkungen geblieben ist, oder, daß die beiden anderen Spiegel SP ihn zwischenzeitlich für ungültig erklärt und einen Ersatzspiegel gesucht haben. Wird eine Wiederanlaufoperation durchgeführt, kann ein derartiger Zustand ermitteln werden. Hierzu führt der anlaufende Spiegel SP wie zuvor beschrieben einen Selbsttest durch.

Bei der vorliegenden Erfindung ist der Lebensdauerzähler ein Zähler, der um ganzzahlige Werte inkrementiert wird. Um einen Überlauf des Lebensdauerzählers zu verhindern, wird der Lebensdauerzähler aller Clients C, Zellen Z und Cluster C in regelmäßigen Abständen abgeglichen, d.h. auf einen niedrigeren gemeinsamen Wert gesetzt.

Hierzu wird der Abgleich von einem beliebigen Spiegel SP angestoßen, z.B. von dem Spiegel SP mit dem niederwertigsten Lebensdauerzähler. Alle nm Spiegel SP eines Felds F warten jeweils auf den Empfang aller nm-1 Antworten AK (PSM). Nur wenn alle nm-1 Antworten AK empfangen werden, führt der jeweilige Spiegel SP einen Abgleich des Lebensdauerzählers durch.

Beim Abgleich des Lebensdauerzählers ist zu beachten, daß das Intervall zwischen zwei Abgleichen so gewählt wird, daß zwischenzeitlich ausgetauschte Spiegel SP nicht durch einen Wiederanlauf erneut gültig werden. Vorzugsweise wird hierfür ein zusätzlicher Speicher verwendet, in dem der Wert des letzten Lebensdauerzählers gespeichert wird, bei dem ein Spiegel SP ausgetauscht wurde.

Auch bei pseudosicheren Nachrichten PSM können Fehler auftreten. Zwar können die Parameter für pseudosicheren Nachrichten PSM so gewählt werden, daß Fehler so unwahrscheinlich sind, das sie für die gewählte Anwendung praktisch nicht auftreten.

Dies kann jedoch dazu führen, das die Anwendung tatsächlich nicht mehr praktikabel ist. Unter Umständen müssen in Bezug auf die Parameter für pseudosicheren Nachrichten PSM Kompromisse eingegangen werden, so daß durch fehlerhafte pseudosichere Nachrichten PSM Fehler entstehen, die korrigiert werden müssen.

Daher muß die Kommunikation der Zellen Z bzw. Spiegel SP untereinander so gestaltet sein, das diese Fehler ohne Folgen bleiben oder korrigiert werden. Dies geschieht beispielsweise durch die Verwendung eines Selbsttests SelfCheck.

Die in diesem Abschnitt beschriebene Operation DoubleFieldCheck dient zur Korrektur von Fehlern, die durch Kommunikationsfehler bei pseudosicheren Nachrichten PSM zustande gekommen sind. Solche Fehler verursachen, daß Spiegelverbände sich duplizieren, also mehr als nm Spiegel für ein Feld existieren.

Die Operation DoubleFieldCheck kann in einem Intervall t_DoubleFieldCheck von einem oder mehreren Spiegeln SP durchgeführt werden. Jeder Client CL kann eine Operation DoubleFieldCheck anstoßen, wenn er Antworten Ak von Spiegeln SP erhält, deren Verweise auf die anderen Spiegel SP nicht konsistent sind.

Die Operation OoubleFieldCheck entfernt zusätzlich entstandene Spiegelverbände, um den gewünschten Zustand von jeweils nm Spiegeln SP für ein Feld F herzustellen.

Hierzu wird ein Manager für die Operation DoubleFieldCheck ausgwählt. Dies kann eine beliebige Zelle Z (auch des Mirrorverbundes) oder auch ein Client CL sein (zum Beispiel der Client, der die Fehlersituation entdeckt hat). Optional sendet der Manager eine Anfrage RQ ins Netz, auf die sich alle Zellen Z melden, die für eine bestimmtes Feld F zuständig sind, wodurch auch weitere zusätzliche Spiegelverbände entdeckt werden.

Der Manager entscheidet dann, welche Zellen Z dem gültigen Mirrorverband angehören und sendet allen anderen Zellen Z eine Löschanfrage DeleteRQ. Optional sendet der Manager allen übrigen verbliebenen Spiegeln SP eine Anfrage rq_updateTable, ihre Spiegeltabellen zu aktualisieren.

Sollten einzelne Zellen Z die Löschanfrage DeleteRQ nicht erhalten, so werden sie beim nächsten Selbsttest SelfCheck und/oder beim der nächsten Operation DoubleFieldCheck deaktiviert.

Um zu entscheiden, welche Zellen Z dem gültigen Spiegelverband angehören, können verschiedene Algorithmen verwendet werden. Im folgenden sind Beispiele hierfür aufgeführt, die auch kombiniert verwendet werden können.

Eine Möglichkeit ist, einen Generationenzähler einzuführen, der jedesmal erhöht wird, wenn ein neuer Spiegel SP zu einem Verbund hinzugefügt wird. Bei Spiegeln SP mit doppelt vorhandenem Index wird der Spiegel Sp mit dem größeren/kleineren Generationenzähler entfernt. Es ist auch möglich, den Spiegelverbund als gültig zu erklären, auf den zuletzt ein Schreibzugriff stattgefunden hat. Des weiteren kann über die Gültigkeit eines Spiegelverbundes auch Abhängigkeit von beliebigen anderen Eigenschaften (z.B. der geographischen Lage von Spiegeln SP) entschieden werden.

Falls nur noch ein einzelner Spiegel SP als korrekt arbeitend z.B. von einem Client CL erkannt wird, ist es möglich, daß der Fehler bei diesem Spiegel SP und nicht bei den nm-1 anderen Spiegeln SP liegt. Um diese Möglichkeit auszuschließen, sollte eine zusätzliche Sicherheitsprüfung durchgeführt werden, um die korrekte Funktion des einzelnen Spiegels SP zu gewährleisten, bevor dieser die anderen Spiegel SP ersetzt. Hierdurch wird vermieden, daß der einzelne arbeitende Spiegel SP irrtümlich zusätzliche Spiegel SP aktiviert.

Arbeite tatsächlich nur noch ein Spiegel SP, sind nm-1 neue Spiegel SP hinzuzufügen.

Zuerst muß der arbeitende Spiegel SP die Funktion seiner eigenen Datenübertragungen überprüfen bzw. sicherstellen. Dann werden mit einer Anfrage rq_needNewCells nm-1 neue Spiegel SP angefordert. An alle nm-1 neuen Spiegel SP wird die Aufforderung gesendet, zu Spiegeln zu werden. Dabei ist es nicht notwendig, die Antworten AK sofort auszuwerten, da etwaige Fehler durch spätere Selbsttests SelfChecks korrigiert werden (dieser Ablauf entspricht in etwa dem Hinzufügen eines neuen Felds F, mit dem Unterschied, daß nur nm-1 Zellen Z gesucht werden und der Spiegelmanager in diesem Fall identisch mit einem Spiegel SP ist).

In den folgenden Abschnitten wird der Datenaustausch zwischen Clients CL, Zellen Z und Clustem C beschrieben, der bevorzugt wird, um die erfindungsgemäßen "aktiven" Zellen zur Verfügung stellen. Insbesondere werden hierfür folgende Operationen verwendet, wobei nun auf Fig. 4 Bezug genommen wird:

Findeoperation (find): Auffinden einer Zelle Z, die ein gewünschtes Feld F enthält. Leseoperation (read): Ein Client CL liest den Inhalt eines Feld F aus einem Spiegel SP. Schreiboperation (write): Ein Client ändert den Inhalt eines Felds F in allen zugeordneten Spiegeln SP.

Hinzufügeoperation (add): Hinzufügen von Feldern F, die bisher noch nicht im Clusterverbund CV enthalten waren.

Löschoperation (delete): Löschen eines Felds F in dem Clusterverbund CV. Durch Aussenden einer Findeanfrage FindRQ ermittelt ein Client CL die Position der Zellen Z, die ein gewünschtes Feld F enthalten und somit Spiegel SP für das gewünschte Feld F sind. Die Adressen dieser Zellen Z enthalten sowohl die Kennungen ClusterID der entsprechenden Cluster C als auch die Kennungen Zellld der Zellen Z selbst.

Um die Adressen der Zellen Z zu erhalten, die Spiegel SP für das gewünschte Feld F (z.B. Feld F8 aus Fig. 2) sind, fragt der Client CL bei einem beliebigen Cluster C, z.B. Cluster C6, an, ob eine seiner Zellen Z das gewünschte Feld F8 beinhaltet. Ist dies der Fall, sendet der Cluster C6 die entsprechende Zellkennung ZeIIID sowie die Clusterkennungen ClusterID aller nm-1 Cluster C aus, die Spiegel SP des gewünschten Felds F8 beinhalten. Wie in Fig. 4 gezeigt, sind das hier die Zelle Z4 in Cluster C1 und die Zelle Z6 in Cluster C3, d.h. insgesamt die Zellen mit den Kennungen ZeIIID C1Z4, C3Z6 und C6Z2.

Enthält der angefragte Cluster C, z.B. Cluster C4, das gewünschte Feld F8 nicht, sucht der angefragte Cluster C4 von den in ihm enthaltenen Zellen Z die Zelle Z, deren Feldposition FeldID der Feldposition FeldID des gewünschten Felds F8 am nächsten liegt. Hierfür kann der Cluster C beispielsweise die Summe der Absolutwerte der Differenz zwischen der Zellposition ZeIIID und allen benachbarten Zellpositionen ZeIIID ermitteln, um die Zellen Z auszuwählen, bei der der Absolutwert einer derartigen Differenz minimal ist.

Da Zellen Z Angaben über benachbarte Zellen enthalten, kann auf diese Weise ein Cluster C gefunden werden, der eine Zelle Z mit dem gewünschten Feld F8 aufweist. Der vom Client CL angefragte Cluster C4 reicht die Findeanfrage FindRQ an den so gefundenen Cluster C weiter, z.B. Cluster C6. Dieser Vorgang wiederholt sich entsprechend bis eine gewünschte Zelle Z gefunden wurde oder keine einer gewünschten Zelle Z benachbarte Zellen Z mehr aufgefunden werden.

Vorzugsweise wird beim Weiterleiten einer Findeanfrage FindRQ ein Schrittzähler inkrementiert. Bei jeder Erhöhung des Schrittzähler sendet der jeweilige aktuelle Cluster C eine Halteanwort HalteAK an den Client CL, um diesem anzugeben, daß seine Anfrage FindRQ noch bearbeitet wird. Empfängt in diesem Fall der anfragende Client CL keine derartige Halteanwort HalteAK, ist davon auszugehen, daß seine Anfrage FindRQ verloren gegangen ist. In diesem Fall ist zu bevorzugen, daß der anfragende Client CL die Anfrage FindRQ erneut an den Cluster C richtet, von dem er die zeitlich letzte Halteanwort HalteAK erhalten hat.

Ein Findeanfrage FindRQ wird erfolgreich abgeschlossen, wenn der anfragende Client CL eine Zielkennung ZieIID für nm Spiegel SP des gewünschten Felds F8 erhält. Bei dem in Fig. 4 gezeigten Beispiel würde die Zielkennung ZieIID die Zellen C1Z4, C3Z6 und C6Z2 umfassen. Erhält der Client CL keine Anwort AK, ist die Findeoperation fehlgeschlagen.

Im folgenden wird der Ablauf beschrieben, der bei Leseanfragen ReadRQ und Schreibanfragen WriteRQ durchgeführt wird. Bei den unten dargestellten Lese- und Schreibanfragen ReadRQ, WriteRQ ist es notwendig, daß der entsprechende Client CL die Kennungen der Spiegel SP kennt, die das Feld F enthalten, auf dessen Daten der Client CL zugreifen möchte. Problematisch ist hierbei, daß die Kennungen der gewünschten Spiegel SP sich durch Umlagern der Spiegel SP jederzeit ändern können.

Um dies zu vermeiden, wäre es prinzipiell möglich, daß jede Findeanfrage FindRQ mit einer Operation LockRQ verbunden wird, die Änderungen des jeweiligen Verbund der gewünschten Spiegel SP verhindert, bevor die eigentliche Lese- und Schreibanfragen ReadRQ, WriteRQ von den gewünschten Spiegeln SP empfangen wurde. Dies würde aber die Effizienz von Datenübertragungen zwischen Clients CL und Clustern C deutlich herabsetzen.

Daher wird bei der bevorzugten Ausführungsform der vorliegenden Erfindung wie folgt verfahren. Ein Client CL führt eine Findeoperation aus und merkt sich die empfangenen Positionen der Spiegel SP, die das gewünschte Feld F enthalten.

Erhält nun ein Spiegel SP Lese- und Schreibanfragen ReadRQ, WriteRQ mit einer Feldposition FeldID für das gewünschte Feld F, die nicht der Feldposition FeldID für das gewünschte Feld F in dem Spiegel SP entspricht, so teilt er dies dem Client CL mit. Des weiteren sendet jeder Spiegel SP die Positionen der anderen nm-1 Spiegel SP immer oder alternativ auf Anfrage an den anfragenden Client CL zurück. Auf diese Weise kann ein Spiegel SP die in ihm gespeicherten Kennungen ID korrigieren und, falls notwendig, eine neue Findeanfrage FindRQ aussenden.

Pseudocode zur Durchführung einer Findeanfrage FindRQ:

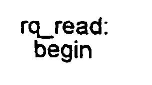

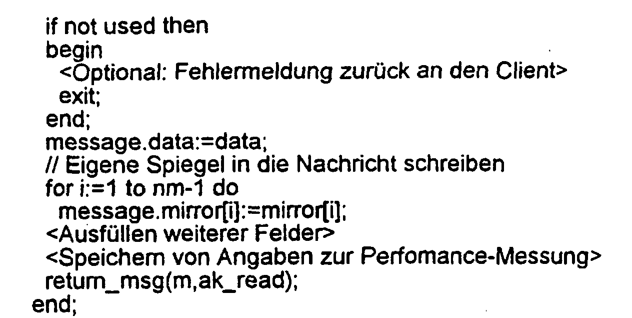

Die Anfrage eines Clients CL wird immer an alle nm Spiegel SP gerichtet:

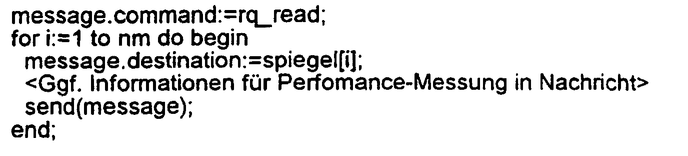

Idealerweise puffert der Client CL seine eigenen Anfragen, um zwischenzeitlich weitere Aktionen (z.B. andere Anfragen) durchführen zu können, bis die 1..nm entsprechenden Antworten ak_read eintreffen oder ein Timeout eintrifft. Nach Ablauf der Wartezeit TWLese muß der Client CL prüfen, wieviele Antworten eingegangen sind und ob die Spiegeltabellen der Antworten konistent sind:

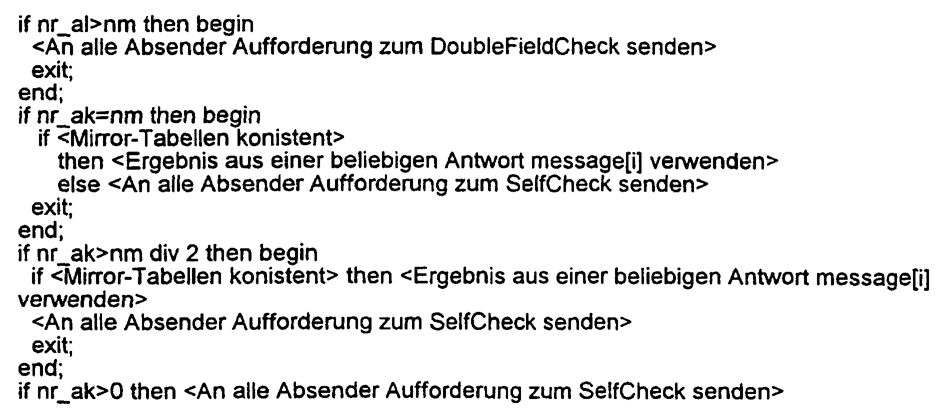

Vorzugsweise werden die Leseanfragen ReadRQ und Schreibanfragen WriteRQ über das Netzwerk N parallel an alle Cluster C gesendet, aber in Abhängigkeit des verwendeten Netzwerks N ist jede andere Art des Sendens möglich.

Jeder Spiegel SP, z.B. Zelle C1Z4, sendet optional eine von einem Client CL eingehende Leseanfrage ReadRQ an alle anderen Spiegel SP weiter, d.h. hier an die Zellen C3Z6 und C6Z2, und jeder Spiegel SP sendet darauf eine Antwort AK an den Client CL. In diesem Fall erhält ein Spiegel SP eine weitere Leseanfrage ReadRQ, die die gleiche Ticketnummer TNr wie eine zuvor empfangene Leseanfrage ReadRQ hat, wird diese ignoriert, da dieser Spiegel SP schon eine Antwort AK an den anfragenden Clients CL gesendet hat.

Wird eine Leseoperation durchgeführt, benötigt der Client CL die Daten eines bestimmten Felds F, z.B. F8. Um diese Daten zu erhalten, muß der Client CL die Positionen der Spiegel SP kennen, die für dieses Feld F8 zuständig sind. Dies kann durch eine zuvor durchgeführte Findeoperation ermöglicht werden, um die als Spiegel SP arbeitenden Zellen C1Z4, C3Z6 und C6Z2 zu ermitteln.

Der Client CL sendet eine entsprechende Leseanfrage ReadRQ mit einer eindeutigen Ticketnummer TNr an alle 3 Cluster C1, C3 und C6, die die für das gewünschte Feld F8 zuständigen Spiegel SP enthalten.

Der Client CL wartet eine vorbestimmte anwendungsspezifische Zeitspanne TWLese auf Antworten AK der angefragten Spiegel SP, die die gewünschten Daten enthalten. Jeder Spiegel SP beantwortet die Leseanfrage ReadRQ mit einer Antwort AK, so daß nm (d.h. hier 3) Antworten AK beim anfragenden Client CL eintreffen.

Der Client CL antwortet in Abhängigkeit von der Art und/oder Anzahl der eingehenden Antworten AK. Werden drei Spiegel SP vorausgesetzt, die für das Feld F der gewünschten Daten zuständig sind, ergeben sich folgende unterschiedliche Zustände.

Erhält der Client CL zwei oder drei gleiche Antworten AK, wird das Ergebnis verwendet.

Erhält er aber zwei unterschiedliche Antworten AK oder nur eine Antwort AK, sendet der Client CL eine Aufforderung zum Selbsttest an die entsprechenden Spiegel SP.

Empfängt der Client CL unterschiedliche Antworten AK, wird die Antwort AK verwendet, deren Lebensdauerzähler den höchsten Wert aufweist.

Eine Leseanfrage ReadRQ verläuft erfolgreich, wenn der Client CL mindestens eine Antwort AK erhält, und kann nicht erfolgreich abgeschlossen werden, wenn der Client CL innerhalb der vorbestimmten Zeitspanne TWLese keine Antwort AK erhält oder einer oder mehrere Cluster CL melden, daß sie die gewünschte Zelle Z nicht gefunden haben.

Um die oben genannten Probleme beim Senden einer Leseanfrage ReadRQ zu vermeiden, ist es zu bevorzugen Findeanfragen FindRQ und Leseanfragen ReadRQ kombiniert auszuführen. In diesem Fall richtet der Client CL eine Finde/Leseanfrage Find/ReadRQ an einen beliebigen Cluster C und erhält von diesem eine Antwort AK, wie bei einer Durchführung einer einzelnen Findeanfrage FindRQ. Hier enthält die Antwort AK nicht die Adresse ID des gewünschten Felds F, sondern die Daten des gewünschten Felds F.

Es ist aber zu berücksichtigen, daß eine kombinierte Finde/Leseanfrage Find/ReadRQ im Vergleich mit einer anfänglichen Findeanfrage FindRQ zum Auffinden der gewünschten Spiegel SP und einer nachfolgenden Leseanfrage ReadRQ an die gewünschten Spiegel SP mehr Zeit benötigt, da hier alle Cluster C eines Clusterverbundes CV die kombinierte und daher umfangreichere Finde/Leseanfrage Find/ReadRQ bearbeiten müssen.

Um die Daten eines Felds F zu verändern, z.B. Feld F8, sendet der Client CL eine Schreibanfrage WriteRQ aus. Wie bei einer Leseanfrage ReadRQ muß der Client CL die Positionen der für das gewünschte Feld F8 zuständigen 3 Spiegel SP kennen.

Der Client CL sendet an alle 3 Spiegel SP des gewünschten Felds F8 eine Schreibanfrage WriteRQ. Darauf werden die Daten des gewünschten Felds F8 bzw. der dazugehörigen als Spiegel SP arbeitenden Zellen C1Z4, C3Z6 und C6Z2 verändert, indem alle Spiegel SP ihre Daten entsprechend aktualisieren. Danach sendet jeder der Spiegel SP dem anfragenden Client CL eine Antwort AK zurück. Sobald alle Antworten AK der Spiegel SP bei dem Client CL eingetroffen sind, ist der Schreibvorgang erfolgreich abgeschlossen.

Wird zu dem Zeitpunkt, zu dem der Client CL seine Schreibanfrage WriteRQ aussendet, schon eine andere Schreibanfrage WriteRQ auf die gewünschten Zellen C1Z4, C3Z6 und C6Z2 durchgeführt, erhält der Client CL eine entsprechende Anwort AK, die angibt, daß die Schreibanfrage WriteRQ fehlgeschlagen ist und die gewünschten Zellen C1Z4, C3Z6 und C6Z2 sich in einem blockierten Zustand (locked state) befinden. Ein Schreibanfrage WriteRQ ist ebenfalls nicht erfolgreich abgeschlossen worden, wenn der anfragende Client CL weniger als nm Antworten AK erhält, d.h. hier weniger als 3 Antworten AK.

Die für eine Schreibanfrage WriteRQ notwendige Synchronisation wird von den beteiligten Spiegeln SP durchgeführt, um zu gewährleisten, daß alle nm Spiegel SP mit den gleichen Daten aktualisiert werden. Erhält ein Spiegel SP eine Schreibanfrage WriteRQ, so sendet er diese Schreibanfrage WriteRQ an alle nm-1 anderen Spiegel SP.

Nur wenn der aussendende Spiegel SP von allen nm-1 anderen Spiegeln SP eine Antwort AK erhält, wird die Schreibanfrage WriteRQ ausgeführt. Dabei kann die von dem Spiegel SP empfangene Schreibanfrage WriteRQ entweder von einem Clients CL oder von einem anderen Spiegel SP des gleichen Verbunds gesendet werden.

Empfängt ein Spiegel SP eine andere Schreibanfrage WriteRQ von einem Spiegel SP mit niedrigerem Index, so werden bei allen Spiegeln SP vorher eingegangene Schreibanfragen WriteRQ überschrieben. Außerdem akzeptiert ein Spiegel SP keine weitere Schreibanfragen WriteRQ von einem Client CL, wenn bereits eine noch nicht vollständig durchgeführte Schreibanfrage WriteRQ von einem anderen Spiegel SP oder Client CL eingegangen ist.

Es ist möglich Findeanfragen FindRQ und Schreibeanfragen WriteRQ kombiniert als Finde/Schreibeanfrage Find/WriteRQ auszuführen, aber es ist zu prüfen, ob der zusätzliche Zeitbedarf vertretbar ist.

Eine Hinzufügeanfrage AddRQ dient dazu, ein Feld F, das bisher noch nicht in dem Clusterverbund CV enthalten ist, in den Clusterverbund CV aufzunehmen. Ein solche Hinzufügeanfrage AddRQ kann von einem Cluster C oder einem Client CL ausgesendet werden.

Eine einzelne Zelle Z, z.B. Zelle C2Z6 aus Fig. 4, erhält von dem Client CL eine Hinzufügeanfrage AddRQ, um als Spiegelmanager zu arbeiten und nm-1 (d.h. 2) neue Spiegel SP in den Clusterverbund CV einzubinden. Bei der zur Zeit bevorzugten Ausführungsform der Erfindung wird immer eine Zelle Z als Spiegelmanager ausgewählt, die selbst kein Spiegel SP ist. Es sind aber auch Ausführungsformen der Erfindung möglich, bei denen der Spiegelmanager selbst auch ein Spiegel ist. Die als Spiegelmanager arbeitende Zelle C2Z6 sendet eine Hinzufügeanfrage AddRQ für 2 Spiegel in das Netzwerk N. Die Hinzufügeanfrage AddRQ wird von Cluster C zu Cluster C in dem Clusterverbund CV weitergereicht, z.B. von Cluster C2 zu Cluster C3, wobei die Anzahl der hinzuzufügenden Spiegel SP beim Weiterreichen der Hinzufügeanfrage AddRQ erniedrigt wird, wenn der zuletzt angefragte Cluster C eine Zelle Z bereitgestellt hat.

Der zuletzt angefragte Cluster C sendet die Kennungen ZeIIID der Zellen Z, die als Spiegel SP in Frage kommen, der als Spiegelmanager arbeitende Zelle C2Z6. Die als Spiegelmanager arbeitende Zelle C2Z6 sendet dann an alle als Spiegel SP in Frage kommenden Zellen C3Z1 und C1Z2 eine entsprechende Antwort AK, vorzugsweise eine pseudosichere Nachricht PSM, die diese anweist zu Spiegeln SP zu werden. Danach sendet die als Spiegelmanager arbeitende Zelle C2Z6 eine entsprechende Antwort AK an den anfragenden Client CL zurück. Eine Hinzufügeanfrage AddRQ wird nicht erfolgreich abgeschlossen, wenn keine Antwort AK oder eine negative Anwort AK von der als Spiegelmanager arbeitende Zelle C2Z6 zurückgesendet wird.

Pseudocode zur Durchführung einer Hinzufügeanfrage AddRQ:

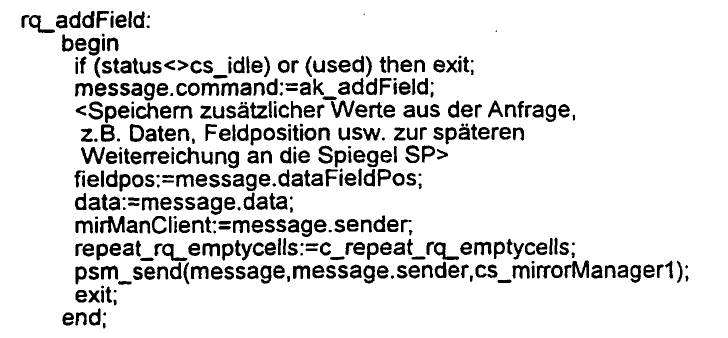

Die Durchführung einer Hinzufügeanfrage AddRQ garantiert nicht, daß nm Spiegel SP für ein gewünschtes Feld F zur Verfügung stehen, sondern, daß entweder nm Spiegel SP zur Verfügung stehen oder nach Ablauf einer vorbestimmten Zeitdauer t überhaupt keine Spiegel SP für das gewünschte Feld F zur Verfügung stehen.

Falls weniger als nm neue Spiegel SP nach Durchführung einer Hinzufügeanfrage AddRQ existieren, kann nur dann eintreten, wenn die bei der Hinzufügeanfrage AddRQ Verwendung findenden pseudosicheren Nachrichten PSM falsche Ergebnisse liefern.

Solche Fehler werden durch spätere Selbsttests der Spiegel SP korrigiert.

Eine Spiegelanfrage SpiegelRQ stellt einen Spezialfall einer Hinzufügeanfrage AddRQ dar, bei der eine Zelle Z, die im folgenden als Manager bezeichnet wird, einen einzelnen neuen Spiegel SP anfordert. Der Manager sendet dabei an die als Spiegel SP in Frage kommenden Zellen Z die Aufforderung, zu neuen Spiegeln SP zu werden.

Sendet der Manager eine Spiegelanfrage SpiegelRQ ins Netzwerk N, wird ab diesem Zeitpunkt eine Wartezeit WT aufgezeichnet bis Antworten AK der als Spiegel SP in Frage kommenden Zellen Z beim Manager eintreffen. Jeder Cluster C, der die Spiegelanfrage SpiegelRQ erhält und Speicherplatz zur Verfügung stellen kann, sendet eine entsprechende Antwort AK an den Manager und stellt Speicherplatz zur Verfügung, der freigehalten wird, um in Form einer Zelle Z bzw. eines Spiegels SP in den Clusterverbund CV eingebunden werden zu können. Kann ein Cluster C keinen Spiegel SP bereitstellen, so reicht er die Spiegelanfrage SpiegelRQ an andere Cluster C weiter.

Hat der Manager eine entsprechende Antwort AK eines neuen Spiegels SP erhalten, verzeichnet er dies in einer Spiegeltabelle. Erhält eine als Spiegel SP in Frage kommende Zelle Z vor Ablauf der Zeitspanne wt vom Manager eine Nachricht MSG, daß kein Spiegel SP mehr benötigt wird, wird sie wieder freigegeben und die Spiegelanfrage SpiegeIRQ wird verworfen.

Tritt bei einer der angefragten Zellen Z eine Zeitüberschreitung Timeout auf, d.h. die Zeitspanne wt der Spiegelanfrage SpiegeIRQ für diese Zelle Z ist abgelaufen, so wird eine neue als Spiegel in Frage kommende Zelle Z gesucht. Dieser Vorgang wird mehrmals wiederholt oder bis alle als Spiegel in Frage kommenden Zellen Z geantwortet haben. Zellen Z, die sich als mögliche Spiegel SP zur Verfügung gestellt haben und deren Antworten AK nach Ablauf der ihr zugeordneten Zeitspanne wt beim Manager eintreffen, werden von diesem ignoriert.

Pseudocode zur Durchführung einer Spiegelanfrage SpiegeIRQ:

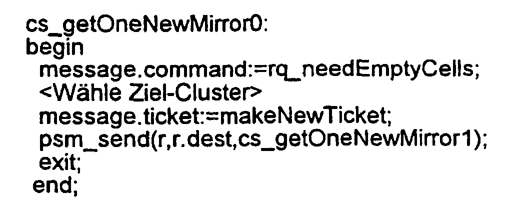

Entweder erhält der Spiegel SP eine Antwort AK oder der Spiegelanfrage SpiegelRQ verfällt:

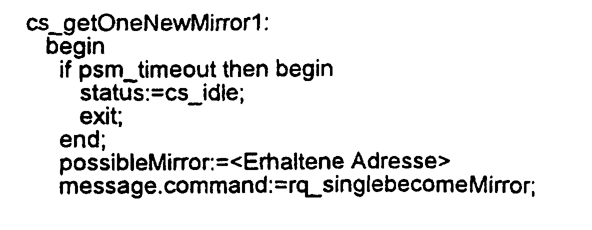

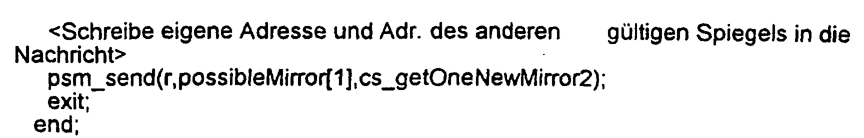

Der noch nicht verwendete Spiegel SP erhält also die Spiegelanfrage SpiegelRQ, zum Spiegel zu werden, die mit folgendem Pseudocode bearbeitet:

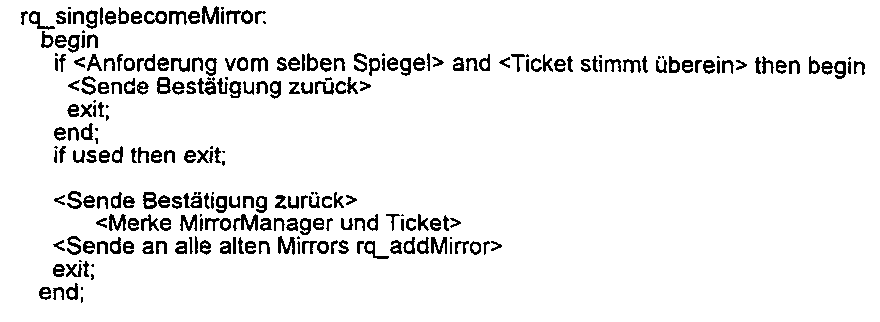

Nun sendet dieser Spiegelkandidat an alle nm-1 alten Spiegel SP die Aufforderung ihn als Spiegel aufzunehmen (rq_addMirror). Da die alten Spiegel SP dies gegenseitig ebenfalls noch verifizieren müssen, muß die Zelle an dieser möglicherweise länger als gewöhnlich auf die Beantwortung der Nachricht warten. Ein Spiegel SP, der diese Aufforderung bekommt, fragt bei allen anderen nm-2 Spiegeln SP nach, ob diese ebenfalls diese Anfrage erhalten haben (rq_certify). Nur wenn das der Fall ist, antworten der Spiegel SP mit einer entsprechenden Antwort ak_addmirror und aktualisiert seine eigene Spiegeltabelle:

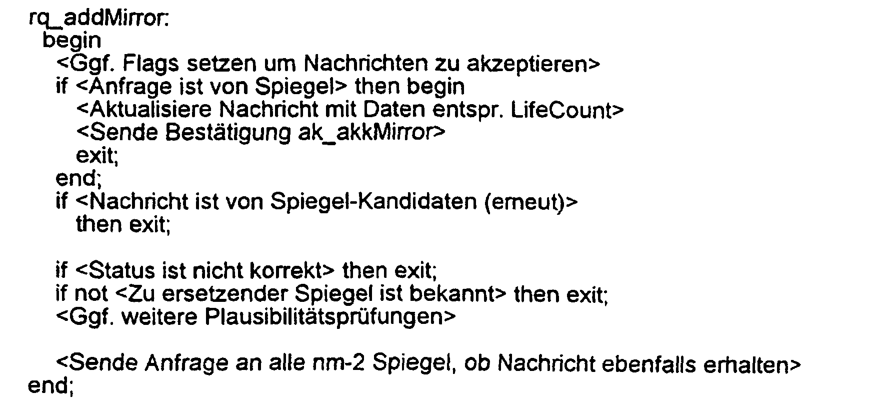

Abschließend akutalisiert der Spiegelkandidat seine Daten:

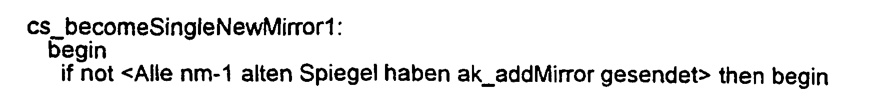

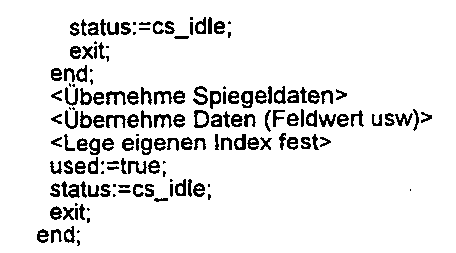

Um ein Feld F aus dem Clusterverbund CV zu entfernen wird z.B. von einem Client CL oder einem Cluster C eine Löschanfrage DeleteRQ an alle dem Feld F zugeordneten nm Spiegel SP gesendet. Eine Löschanfrage DeleteRQ stellt sicher, daß entweder alle nm Spiegel SP entfernt werden oder im Falle einer nicht erfolgreichen Durchführung der Löschanfrage DeleteRQ kein Spiegel SP entfernt wird, um konsistente Daten in dem Clusterverbund CV zu gewährleisten.

Optional reicht jeder Spiegel SP, der die Löschanfrage DeleteRQ erhält, sie an alle anderen nm-1 Spiegel SP weiter: Ein Spiegel der eine Löschanfrage DeleteRQ erhält, "löscht" sich, d.h. die jeweilige Zelle Z wechselt in einen Leerlaufzustand (idle) und meldet dies mit einer entsprechenden Antwort AK dem Absender der Löschanfrage DeleteRQ.

Eine Löschanfrage DeleteRQ verläuft erfolgreich, wenn der Absender nm Antworten AK erhält, wonach sich die nm Spiegel SP des Felds F gelöscht haben. Erhält der Absender nach Ablauf einer vorbestimmten Zeitspanne keine Antwort AK, wonach sich die nm Spiegel SP des Felds F gelöscht haben, ist die Löschanfrage DeleteRQ fehlgeschlagen.

Pseudocode zur Durchführung einer Löschanfrage DeleteRQ:
rq_delete:

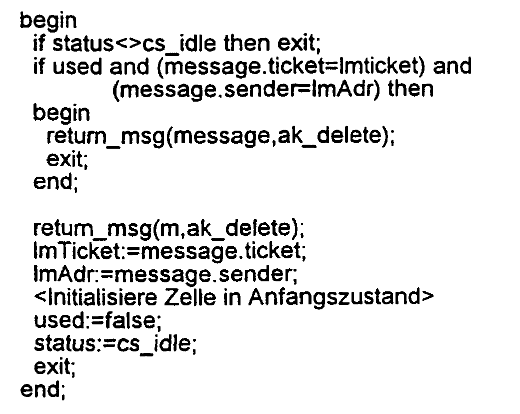

Verschiebeoperationen werden verwendet, einzelne Spiegel SP eines Spiegelverbunds anderen Zellen Z zuzuweisen, die dann die bisherigen Spiegel SP entsprechend ersetzen. Es gibt verschiedene Gründe, die Verschiebeoperationen notwendig machen:
- Ausfall eines Clusters C oder einzelner Zellen Z
- Entfernen eines Clusters C aus einem Clusterverband CV
- Unzureichende Datenübertragungsleistung eines Clusters C
- Anwendungsspezifische Ursachen/Gründe

Das Verschieben von Spiegeln SP beim Anfordern neuer Spiegel SP ist oben schon beschrieben worden. Soll ein Cluster C aus dem Clusterverbund CV entfernt werden, beispielsweise wenn ein Cluster C heruntergefahren oder für andere Aufgaben in dem Netzwerk N verwendet werden soll, müssen die Daten seiner aktiven Zellen Z, d.h. der Zellen Z, die als Spiegel SP arbeiten, auf andere Cluster C verschoben werden. In diesem Fall initiiert der zu entfernende Cluster C das Verschieben der Daten bzw. der Spiegel SP der einzelnen Spiegelverbände (wie oben beschrieben).

Um Verschiebeoperationen wegen unzureichender Datenübertragungsleistung einzuleiten, wird hier die Datenübertragungsleistung der Cluster C und/oder Zellen Z während des Betriebs überprüft. Hierfür verwendet die bevorzugte Ausführungsform der vorliegenden Erfindung einen Zähler für jeden Spiegel SP und/oder jede Zelle Z, der bei pseudosicheren Nachrichten PSM die Übertragungsdauer ermittelt. Optional wird ein Zeitgeber (timer) implementiert, der jeweils die durchschnittliche Datenübertragungsdauer ermittelt, wobei hier eine gemeinsame Zeitbasis erforderlich ist.

Vorzugsweise ermittelt jeder Cluster C die Datenübertragungsleistungen seiner Zellen Z. Spiegel SP bzw. Zellen Z, deren Datenübertragungenszeiten vorbestimmte Grenzwerte überschreiten, werden verschoben.

Die Bewertung der Datenübertragungsleistung hinsichtlich der Datenübertragungsdauer ist aber nur als Beispiel zu verstehen und jeder gewünschte, für die jeweilige Anwendung der Erfindung geeignete Parameter von Datenübertragungsleistungen kann zu Einleitung von Verschiebeoperationen mit bekannten Verfahren überprüft werden. Z.B. könnte die Rechenleistung einzelner Zellen Z und/oder Cluster C, oder die Leistung einzelner Bereiche des Netzwerks N überprüft werden.

Ist für einen Spiegel SP, z.B. Zelle C6Z2 aus Fig. 4, eine derartige unzureichende Datenübertragungsleistungen festgestellt worden, wird ein einzelner Spiegel SP aus dem entsprechenden Verbund zum Manager, z.B. Zelle C1Z4. Der Manager C1Z4 sendet vorzugsweise mit einer pseudosicheren Nachricht PSM eine Anfrage RQ an alle anderen 2, als Spiegel SP arbeitenden Zellen C3Z6 und C6Z2 des Verbunds, den betreffenden Spiegel SP (C6Z2) zu entfernen. Dieser macht sich selbst ungültig oder wird von dem entsprechenden Cluster C6 für ungültig erklärt.

Danach fordert der Manager C1Z4 einen neuen Spiegel SP in dem Clusterverbund CV an, wobei im Gegensatz zum oben beschriebenen Ersatz für einen Spiegel SP weitere Bedingungen an den neuen Spiegel SP gestellt werden können, vorzugsweise Bedingungen hinsichtlich der Datenübertragungsleistung. Der neue Spiegel SP wird in der oben beschriebenen Weise in den Spiegelverbund integriert.

Um zu gewährleisten, daß alle Spiegel SP Informationen über die Verschiebeoperation erhalten haben, sendet der Manager eine Anfrage RQ (vorzugsweise mit einer pseudosicheren Nachricht PSM), die Verschiebeoperation wieder rückgängig zu machen, wenn er nicht von allen nm-1 Spiegeln SP eine entsprechende Antwort AK erhalten hat. In diesem Fall konnte die Verschiebeoperation nicht erfolgreich durchgeführt werden.

Die im Zusammenhang mit Zellen Z und Spiegeln SP oben beschriebenen Operationen, sind entsprechend auch für Operationen hinsichtlich der erfindungsgemäßen Cluster C anwendbar. Daher wird hier eine detaillierte Beschreibung der Operationen zum Hinzufügen, Entfernen, Verschieben und Deaktivieren einzelner Cluster C verzichtet.

## Patentansprüche

1. Datenzugriffs- und -verwaltungssystem für ein Rechnersystem, mit
- wenigstens zwei Datenspeichereinrichtungen (C1, C2,..., Cn),
- wenigstens einer Rechnereinheit (CL), die auf Daten der Datenspeichereinrichtungen (C) zugreift,
- Datenübertragungseinrichtungen (N) zur Datenübertragung zwischen den Datenspeichereinrichtungen (C) und der Rechnereinheit (CL), wobei die Daten in wenigstens zwei der wenigstens zwei Datenspeichereinrichtungen (C) redundant gespeichert sind, und
- Einrichtungen zur Erfassung vorbestimmter Parameter der Datenübertragung zwischen den Datenspeichereinrichtungen (C) und der Rechnereinheit (CL), wobei Daten in Abhängigkeit von den ermittelten vorbestimmten Parametern in den Datenspeichereinrichtungen (C) redundant gespeichert sind, und wobei die Rechnereinheit (CL) in Abhängigkeit von den ermittelten vorbestimmten Parametern auf eine der Datenspeichereinrichtungen (C) zugreift,
**dadurch gekennzeichnet, daß**
- die Datenspeichereinrichtungen (C) Einrichtungen zur Erfassung vorbestimmter Parameter für Datenübertragungen zwischen den Datenspeichereinrichtungen (C) umfassen, und
- die Datenspeichereinrichtungen (C) unabhängig von einem Zugriff der Rechnereinheit (CL) in dem System redundant gespeicherte Daten in Abhängigkeit der ermittelten Parameter von Datenübertragungen zwischen den Datenspeichereinrichtungen (C) verschieben.

2. System nach Anspruch 1, **dadurch gekennzeichnet, daß** die Datenspeichereinrichtungen (C) jeweils Steuereinheiten zur Steuerung des Datenzugriffs und der Datenverwaltung umfassen.

3. System nach einem der vorhergehenden Ansprüche, **dadurch gekennzeichnet, daß** die Datenspeichereinrichtungen (C) in dem System redundant gespeicherte Daten in Abhängigkeit der ermittelten Parameter von Datenübertragungen zwischen den einzelnen Datenspeichereinrichtungen (C) und der Rechnereinheit (CL) untereinander kopieren und in den Datenspeichereinrichtungen (C) löschen, in denen die kopierten Daten zuvor gespeichert waren.

4. System nach einem der vorhergehenden Ansprüche, **dadurch gekennzeichnet, daß** die Datenspeichereinrichtungen (C) die gespeicherten Daten unabhängig von der Rechnereinheit (CL) bearbeiten.

5. System nach einem der vorhergehenden Ansprüche, **dadurch gekennzeichnet, daß** die in dem System gespeicherten Daten in Datenteilmengen (F) unterteilt sind, und die Datenspeichereinrichtungen (C) so in Zellen (Z) unterteilt sind, daß redundant zu speichernde der Datenteilmengen (F) in jeweils einer der Zellen (Z) der entsprechenden Datenspeichereinrichtungen (C) gespeichert sind.

6. System nach Anspruch 5, **dadurch gekennzeichnet, daß** die Datenspeichereinrichtungen (C) in Abhängigkeit von den Datenübertragungsparametern in Zellen (Z) unterteilt sind.

7. System nach einem der Ansprüche 5 oder 6, **dadurch gekennzeichnet, daß** jede Zelle (Z) zusätzliche Daten zum Datenzugriff und zur Datenverwaltung aufweist, die die Parameter von Datenübertragungen zwischen den einzelnen Datenspeichereinrichtungen (C) und der Rechnereinheit (CL), und/oder benachbarte Zellen (Z), und/oder Zellen (Z) betreffen, die die in dem System redundant gespeicherten Daten umfassen.

8. System nach einem der Ansprüche 5 bis 7, **dadurch gekennzeichnet, daß** die Zellen (Z) untereinander Daten austauschen, die zum Datenzugriff und zur Datenverwaltung verwendet werden.

9. System nach einem der Ansprüche 5 bis 8, **dadurch gekennzeichnet, daß** die Parameter von Datenübertragungen zwischen den einzelnen Datenspeichereinrichtungen (C) und der Rechnereinheit (CL) für Zellen (Z) einer Datenspeichereinrichtung (C) gleich sind.

10. System nach einem der vorhergehenden Ansprüche, **dadurch gekennzeichnet, daß** die Rechnereinheit (CL) Daten zur Speicherung in den Datenspeichereinrichtungen (C) ausgibt und/oder in den Datenspeichereinrichtungen (C) gespeicherte Daten bearbeitet.

11. System nach einem der vorhergehenden Ansprüche, **dadurch gekennzeichnet, daß** die Rechnereinheit (CL). in Verbindung mit einem Benutzer (B) steht, um die erhaltenen Daten weiterzuleiten und/oder von dem Benutzer (B) gesteuert zu werden.

12. System nach Anspruch 11, **dadurch gekennzeichnet, daß** der Benutzer (B) ein Personal Computer und/oder eine zentrale Recheneinheit eines Computers und/oder eine weitere Datenspeichereinrichtung ist.

13. System nach einem der vorhergehenden Ansprüche, **dadurch gekennzeichnet, daß** die Rechnereinheit (CL) ein System ist, das Intemetdienste zur Verfügung stellt.

14. System nach einem der Ansprüche 5 bis 13, **dadurch gekennzeichnet, daß** die Rechnereinheit (CL) direkt auf einzelne Zellen (Z) der Datenspeichereinrichtungen (C) zugreift.

15. System nach einem der vorhergehenden Ansprüche, **dadurch gekennzeichnet, daß** die vorbestimmten Parameter von Datenübertragungen zwischen den einzelnen Datenspeichereinrichtungen (C) und der Rechnereinheit (CL) die Übertragungsdauer und/oder die Fehlerrate und/oder die Dauer von Datenbearbeitungen der einzelnen Datenspeichereinrichtungen (C) vor der Übertragung der Daten umfassen.

16. System nach einem der vorhergehenden Ansprüche, **dadurch gekennzeichnet, daß** die Datenübertragungseinrichtungen (N) elektrisch leitende Verbindungen und/oder Bussysteme und/oder Rechnemetzwerke und/oder drahtgebundene oder drahtlose (mobile) Telefonnetzwerke und/oder das Internet umfassen.

17. Datenbanksystem oder Rechnerstruktur, das mit einem System nach einem der Ansprüche 1 bis 16 Daten verwaltet.

18. System für ein Computerspiel, das über das Internet zur Verfügung gestellt wird, das ein System nach einem der Ansprüche 1 bis 17 umfaßt.

19. System nach Anspruch 18, **dadurch gekennzeichnet, daß** wenigstens eine Rechnereinheit (CL) ein Internet-Service-Provider ist.

20. System nach Anspruch 18 oder 19, **dadurch gekennzeichnet, daß** das Computerspiel ein interaktives Computerspiel zur Benutzung durch wenigstens zwei Benutzer (B) ist.

21. System nach Anspruch 20, **dadurch gekennzeichnet, daß** jeder Benutzer (B) jeweils mit einer Rechnereinheit (CL) verbunden ist.

22. System nach Anspruch 20 oder 21, **dadurch gekennzeichnet, daß** die Rechnereinheiten (CL) Daten zur Durchführung des Computerspiels an die entsprechenden Benutzer (B) übertragen.

23. System nach Anspruch 22, **dadurch gekennzeichnet, daß** die Benutzer (B) die erhaltenen Daten zur Durchführung des Computerspiels bearbeiten und an die entsprechenden Rechnereinheiten (CL) zurück übertragen.

24. System nach einem der Ansprüche 18 bis 23, **dadurch gekennzeichnet, daß** zusätzlich Einrichtungen zur Erfassung vorbestimmter Parameter der Datenübertragung zwischen den Rechnereinheiten (CL) und den jeweils damit verbundenen Benutzern (B) vorhanden sind.

25. System nach Anspruch 24, **dadurch gekennzeichnet, daß** die vorbestimmten Parameter von Datenübertragungen zwischen den Rechnereinheiten (CL) und den jeweils damit verbundenen Benutzern (B) die Übertragungsdauer, und/oder die Fehlerrate, und/oder die Dauer von Datenbearbeitungen der einzelnen Rechnereinheiten (CL) und/oder der einzelnen Benutzern (B) vor der Übertragung der Daten umfassen.

26. System nach Anspruch 24 oder 25, **dadurch gekennzeichnet, daß** die Daten zur Durchführung des Computerspiels auch in Abhängigkeit der ermittelten vorbestimmten Parameter der Datenübertragung zwischen den Rechnereinheiten (CL) und den jeweils damit verbundenen Benutzern (B) redundant gespeichert sind.

27. System nach einem der Ansprüche 18 bis 26, **dadurch gekennzeichnet, daß** die Rechnereinheiten (CL) von den entsprechenden Benutzern (B) Steuerdaten zur Durchführung des Computerspiels erhalten.

28. System nach Anspruch 27, **dadurch gekennzeichnet, daß** die Rechnereinheiten (CL) die Steuerdaten oder entsprechende Daten an die Datenspeichereinrichtungen (C) ausgeben.

29. System nach einem der Ansprüche 27 oder 28, **dadurch gekennzeichnet daß** die Rechnereinheiten (CL) in Abhängigkeit der Steuerdaten Daten zur Durchführung des Computerspiels bearbeiten, und/oder die Datenspeichereinrichtungen (C) in Abhängigkeit der Steuerdaten oder der den Steuerdaten entsprechenden Daten Daten zur Durchführung des Computerspiels bearbeiten.

30. Verfahren zum Datenzugriff und zur Datenverwaltung für ein Rechnersystem, das folgende Schritte umfaßt:
- Speichern von Daten in wenigstens zwei Datenspeichereinrichtungen (C),
- Zugreifen auf die Daten der Datenspeichereinrichtungen (C) mittels wenigstens einer Rechnereinheit (CL) über Datenübertragungeinrichtungen (N), wobei
- vorbestimmte Parameter der Datenübertragung zwischen den Datenspeichereinrichtungen (C) und der Rechnereinheit (CL) ermittelt werden,
- die Daten in wenigstens zwei der wenigstens zwei Datenspeichereinrichtungen (C) in Abhängigkeit von den ermittelten Parametern der Datenübertragung redundant gespeichert werden, und
- das Zugreifen auf die Daten in Abhängigkeit von den ermittelten Parametern der Datenübertragung erfolgt,
**dadurch gekennzeichnet, daß**
- die Datenspeichereinrichtungen (C) vorbestimmte Parameter für Datenübertragungen zwischen den Datenspeichereinrichtungen (C) erfassen, und
- redundant gespeicherte Daten unabhängig von einem Zugriff der Rechnereinheit (CL) auf die Daten in Abhängigkeit der ermittelten Parameter von Datenübertragungen zwischen den Datenspeichereinrichtungen verschoben werden.

31. Verfahren nach Anspruch 30, **dadurch gekennzeichnet, daß** der Datenzugriff und die Datenverwaltung von den Datenspeichereinrichtungen (C) gesteuert wird.

32. Verfahren nach Anspruch 30 oder 31, **dadurch gekennzeichnet, daß** mit dem Verfahren redundant gespeicherte Daten in Abhängigkeit von den ermittelten Parametern von Datenübertragungen zwischen den einzelnen Datenspeichereinrichtungen (C) und der Rechnereinheit von den Datenspeichereinrichtungen untereinander kopiert und in den Datenspeichereinrichtungen gelöscht werden, in denen die kopierten Daten zuvor gespeichert wurden.

33. Verfahren nach einem der Ansprüche 30 bis 32, **dadurch gekennzeichnet daß** die gespeicherten Daten von den Datenspeichereinrichtungen (C) unabhängig von der Rechnereinheit (CL) bearbeitet werden.

34. Verfahren nach einem der Ansprüche 30 bis 33, **dadurch gekennzeichnet, daß** die Daten in Datenteilmengen (F) unterteilt werden, und redundant zu speichernde der Datenteilmengen (F) jeweils in Zellen (Z) der einzelnen Datenspeichereinrichtungen (C) gespeichert werden.

35. Verfahren nach einem der Ansprüche 30 bis 34, **dadurch gekennzeichnet, daß** das Unterteilen in Datenteilmengen (F) und das Speichern in die Zellen (Z) in Abhängigkeit der Datenübertragungsparameter durchgeführt wird.

36. Verfahren nach einem der Ansprüche 34 bis 35, **dadurch gekennzeichnet, daß** zusätzliche Daten zum Datenzugriff und zur Datenverwaltung in den Zellen (Z) gespeichert werden, die die Parameter von Datenübertragungen zwischen den einzelnen Datenspeichereinrichtungen (C) und der Rechnereinheit (CL), und/oder benachbarte Zellen (Z), und/oder Zellen (Z) betreffen, die die in dem System redundant gespeicherten Daten umfassen.

37. Verfahren nach einem der Ansprüche 34 bis 36, **dadurch gekennzeichnet daß** zusätzliche Daten zum Datenzugriff und zur Datenverwaltung zwischen den Zellen (Z) der Datenspeichereinrichtungen (C) ausgetauscht werden.

38. Verfahren nach einem der Ansprüche 34 bis 37, **dadurch gekennzeichnet, daß** das Zugreifen auf Daten von Zellen (Z) einer Datenspeichereinrichtung (C) die gleichen Datenübertragungsparameter aufweist.

39. Verfahren nach einem der Ansprüche 30 bis 38, **dadurch gekennzeichnet, daß** Daten von der Rechnereinheit (CL) zur Speicherung in den Datenspeichereinrichtungen (C) ausgegeben und/oder die in den Datenspeichereinrichtungen (C) gespeicherten Daten von der Rechnereinheit (CL) bearbeitet werden.

40. Verfahren nach einem der Ansprüche 30 bis 39, **dadurch gekennzeichnet, daß** die Daten von der Rechnereinheit (CL) an einen Benutzer (B) übertragen werden und/oder die Rechnereinheit (CL) von dem Benutzer (B) gesteuert wird.

41. Verfahren nach einem der Ansprüche 30 bis 40, **dadurch gekennzeichnet, daß** das Verfahren Intemetdienste zur Verfügung stellt.

42. Verfahren nach einem der Ansprüche 34 bis 41, **dadurch gekennzeichnet, daß** der Zugriff direkt auf die Daten einzelner Zellen (Z) der Datenspeichereinrichtungen (C) erfolgt.

43. Verfahren nach einem der Ansprüche 30 bis 42, **dadurch gekennzeichnet, daß** die Ermittlung der vorbestimmten Parameter von Datenübertragungen zwischen den einzelnen Datenspeichereinrichtungen (C) und der Rechnereinheit (CL) die Ermittlung der Übertragungsdauer, und/oder der Fehlerrate, und/oder der Dauer von Datenbearbeitungen der einzelnen Datenspeichereinrichtungen (C) vor der Übertragung der Daten umfaßt.

44. Verfahren für ein Datenbanksystem oder eine Rechnerstruktur, das mit einem Verfahren nach einem der Ansprüche 30 bis 43 Daten verwaltet.

45. Verfahren für ein Computerspiel, das über das Internet zur Verfügung gestellt wird, das ein Verfahren nach einem der Ansprüche 30 bis 44 umfaßt.

46. Verfahren nach Anspruch 45, **dadurch gekennzeichnet, daß** das Zugreifen auf Daten in den Datenspeichereinrichtungen (C) die Nutzung eines Internet-Service-Providers umfaßt, der als Rechnereinheit (CL) arbeitet.

47. Verfahren nach Anspruch 45 oder 46, **dadurch gekennzeichnet, daß** wenigstens zwei Benutzer (B) auf das Computerspiel zugreifen, wobei das Computerspiel ein interaktives Computerspiel ist.

48. System nach Anspruch 47, **dadurch gekennzeichnet, daß** die Daten zur Durchführung des Computerspiels von den Rechnereinheiten (CL) an die entsprechenden Benutzer (B) übertragen werden.

49. Verfahren nach Anspruch 48, **dadurch gekennzeichnet, daß** die von den Benutzem (B) erhaltenen Daten von den Benutzern (B) bearbeitet und an die entsprechenden Rechnereinheiten (CL) zurück übertragen werden.

50. Verfahren nach einem der Ansprüche 45 bis 49, **dadurch gekennzeichnet, daß** zusätzlich vorbestimmte Parameter der Datenübertragung zwischen den Rechnereinheiten (CL) und den jeweils damit verbundenen Benutzern (B) ermittelt werden.

51. Verfahren nach Anspruch 50, **dadurch gekennzeichnet, daß** die Ermittlung der vorbestimmten Parameter von Datenübertragungen zwischen den Rechnereinheiten (CL) und den jeweils damit verbundenen Benutzern (B) die Ermittlung der Übertragungsdauer, und/oder der Fehlerrate, und/oder der Dauer von Datenbearbeitungen der einzelnen Rechnereinheiten (CL) und/oder der einzelnen Benutzern (B) vor der Übertragung der Daten umfaßt.

52. Verfahren nach Anspruch 50 oder 51, **dadurch gekennzeichnet, daß** die redundante Speicherung der Daten zur Durchführung des Computerspiels auch in Abhängigkeit der ermittelten vorbestimmten Parameter der Datenübertragung zwischen den Rechnereinheiten (CL) und den jeweils damit verbundenen Benutzern (B) durchgeführt wird.

53. Verfahren nach einem der Ansprüche 45 bis 52, **dadurch gekennzeichnet, daß** Steuerdaten zur Durchführung des Computerspiels von den Benutzern (B) an die entsprechenden Rechnereinheiten (CL) übertragen werden.

54. Verfahren nach Anspruch 53, **dadurch gekennzeichnet, daß** die Steuerdaten oder entsprechende Daten von den Rechnereinheiten (CL) an die Datenspeichereinrichtungen (C) übertragen werden.

55. Verfahren nach einem der Ansprüche 53 oder 54, **dadurch gekennzeichnet, daß** die Daten zur Durchführung des Computerspiels in Abhängigkeit der Steuerdaten von den Rechnereinheiten (CL) bearbeitet werden, und/oder die Daten zur Durchführung des Computerspiels in Abhängigkeit der Steuerdaten oder der den Steuerdaten entsprechenden Daten von den Datenspeichereinrichtungen (C) bearbeitet werden.

## Claims

1. A data access and management system for a computer system, comprising:
- at least two data storage means (C1, C2, ..., Cn);
- at least one computer unit (CL) which accesses data of the data storage means (C);
- data transmission means (N) for data transmission between the data storage means (C) and the computer unit (CL), with the data being stored in a redundant manner in at least two of the at least two data storage means (C), and
- means for the detection of prespecified parameters of the data transmission between the data storage means (C) and the computer unit (CL), with data being preferably stored in a redundant manner in the data storage means (C) as a function of the determined prespecified parameters, and with the computer unit (CL) accessing one of the data storage means (C) as a function of the determined prespecified parameters,
**characterised in that**
- the data storage means (C) comprise means for the detection of prespecified parameters for data transmissions between the data storage means (C), and
- the data storage means (C) shift data redundantly stored in the system independent of an access of the computer unit (CL) as a function of the determined parameters of data transmissions between the data storage means (C).

2. The system according to Claim 1, **characterised in that** the data storage means (C) each comprise control units for controlling the data access and the data management.

3. The system according to one of the previous claims, **characterised in that** the data storage means (C) copy data redundantly stored in the system among each other as a function of the determined parameters of data transmissions between the individual data storage means (C) and the computer unit (CL) and delete the data in the data storage means (C) in which it had been stored previously.

4. The system according to one of the previous claims, **characterised in that** the data storage means (C) process the stored data independent from the computer unit (CL).

5. The system according to one of the previous claims, **characterised in that** the data stored in the system is divided into data subsets (F), and the data storage means (C) are divided into cells (Z) in such a manner that data subsets (F) to be stored in a redundant manner are stored in one each of the cells (Z) of the corresponding data storage means (C).

6. The system according to Claim 5, **characterised in that** the data storage means (C) are divided into cells (Z) depending on the data transmission parameters.

7. The system according to one of Claims 5 or 6, **characterised in that** each cell (Z) comprises additional data for data access and data management which relates to the parameters of data transmissions between the individual data storage means (C) and the computer unit (CL), and/or neighbouring cells (Z), and/or cells (Z) comprising data stored in the system in a redundant manner.

8. The system according to one of Claims 5 to 7, **characterised in that** the cells (Z) interchange data among each other which is used for the data access and the data management.

9. The system according to one of Claims 5 to 8, **characterised in that** the parameters of data transmission between the individual data storage means (C) and the computer unit (CL) are identical for cells (Z) of a data storage means (C).

10. The system according to one of the previous claims, **characterised in that** the computer unit (CL) outputs data for storage in the data storage means (C) and/or processes data stored in the data storage means (C).

11. The system according to one of the previous claims, **characterised in that** the computer unit (CL) is connected with a user (B) in order to transmit the received data and/or to be controlled by the user (B).

12. The system according to Claim 11, **characterised in that** the user (B) is a personal computer and/or a central processing unit of a computer and/or an additional data storage means.

13. The system according to one of the previous claims, **characterised in that** the computer unit (CL) is a system which provides Internet services.

14. The system according to one of Claims 5 to 13, **characterised in that** the computer unit (CL) accesses individual cells (Z) of the data storage means (C) directly.

15. The system according to one of the previous claims, **characterised in that** the prespecified parameters of data transmissions between the individual data storage means (C) and the computer unit (CL) comprise the duration of the transmission and/or the fault rate and/or the duration of data processing operations of the individual data storage means (C) prior to the transmission of the data.

16. The system according to one of the previous claims, **characterised in that** the data transmission means (N) comprise electrically conductive connections and/or bus systems and/or computer networks and/or wired or wireless (mobile) telephone networks and/or the Internet.

17. A database system or a computer structure which manages data by means of a system according to one of Claims 1 to 16.

18. A system for a computer game provided via the Internet, which comprises a system according to one of Claims 1 to 17.

19. The system according to Claim 18, **characterised in that** at least one computer unit (CL) is an Internet service provider.

20. The system according to Claim 18 or 19, **characterised in that** the computer game is an interactive computer game to be used by at least two users (B).

21. The system according to Claim 20, **characterised in that** each user (B) is connected with one computer unit (CL) each.

22. The system according to Claim 20 or 21, **characterised in that** the computer units (CL) transmit data for executing the computer game to the respective users (B).

23. The system according to Claim 22, **characterised in that** the users (B) process the received data for executing the computer game and transmit it back to the corresponding computer units (CL).

24. The system according to one of Claims 18 to 23, **characterised in that** additional means are provided for the detection of prespecified parameters of the data transmission between the computer units (CL) and the users (B) respectively connected with them.

25. The system according to Claim 24, **characterised in that** the prespecified parameters of data transmissions between the computer units (CL) and the users (B) respectively connected with them comprise the duration of the transmission and/or the fault rate and/or the duration of data processing operations of the individual computer units (CL) and/or the individual users (B) prior to the transmission of the data.

26. The system according to Claim 24 or 25, **characterised in that** the data for executing the computer game is also stored in a redundant manner as a function of the determined prespecified parameters of the data transmission between the computer units (CL) and the users (B) respectively connected with them.

27. The system according to one of Claims 18 to 26, **characterised in that** the computer units (CL) receive control data for executing the computer game from the respective users (B).

28. The system according to Claim 27, **characterised in that** the computer units (CL) output the control data or equivalent data to the data storage means (C).

29. The system according to one of Claims 27 or 28, **characterised in that** the computer units (CL) process data for executing the computer game depending on the control data, and/or the data storage means (C) process data for executing the computer game, depending on the control data or on data equivalent to the control data.

30. A method for data access and data management for a computer system, comprising the following steps:
- storing of data in at least two data storage means (C);
- accessing the data in the data storage means (C) by at least one computer unit (CL) via data transmission means (N), with
- prespecified parameters of the data transmission between the data storage means (C) and the computer unit (CL) being determined;
- the data being stored in a redundant manner in at least two of the at least two data storage means (C) as a function of the determined parameters of the data transmission; and
- the access to the data being effected as a function of the determined parameters of the data transmission,
**characterised in that**
- the data storage means (C) detect prespecified parameters for data transmissions between the data storage means (C), and
- redundantly stored data is shifted independently of an access of the computer unit (CL) to the data as a function of the determined parameters of data transmissions between the data storage means.

31. The method according to Claim 30, **characterised in that** data access and data management are controlled by the data storage means (C).

32. The method according to Claim 30 or 31, **characterised in that** by means of the method redundantly stored data are copied among each other by the data storage means as a function of the determined parameters of data transmissions between the individual data storage means (C) and the computer unit and deleted in the data storage means in which the copied data had been stored previously.

33. The method according to one of Claims 30 to 32, **characterised in that** the stored data is processed by the data storage means (C), independent of the computer unit (CL).

34. The method according to one of Claims 30 to 33, **characterised in that** the data are divided into data subsets (F) and the data subsets (F) to be stored in a redundant manner are stored in each case in cells (Z) of the individual data storage means (C).

35. The method according to one of Claims 30 to 34, **characterised in that** the division into data subsets (F) and the storage in the cells (Z) are carried out as a function of the data transmission parameters.

36. The method according to one of Claims 34 to 35, **characterised in that** additional data for data access and data management is stored in the cells (Z), which relate to the parameters of data transmissions between the individual data storage means (C) and the computer unit (CL) and/or neighbouring cells (Z) and/or cells (Z) comprising the data redundantly stored in the system.

37. The method according to one of Claims 34 to 36, **characterised in that** additional data for data access and data management are exchanged between the cells (Z) of the data storage means (C).

38. The method according to one of Claims 34 to 37, **characterised in that** the access to data of cells (Z) of a data storage means (C) has identical data transmission parameters.

39. The method according to one of Claims 30 to 38, **characterised in that** data is output by the computer unit (CL) for storage in the data storage means (C) and/or the data stored in the data storage means (C) is processed by the computer unit (CL).

40. The method according to one of Claims 30 to 39, **characterised in that** the data is transmitted by the computer unit (CL) to a user (B) and/or the computer unit (CL) is controlled by the user (B).

41. The method according to one of Claims 30 to 40, **characterised in that** the method provides Internet services.

42. The method according to one of Claims 34 to 41, **characterised in that** the access is made directly to the data of individual cells (Z) of the data storage means (C).

43. The method according to one of Claims 30 to 42, **characterised in that** the determination of the prespecified parameters of data transmissions between the individual data storage means (C) and the computer unit (CL) comprises the determination of the duration of the transmission and/or the fault rate and/or the duration of data processing operations of the individual data storage means (C) prior to the transmission of the data.

44. A method for a database system or a computer structure which manages data by means of a method according to one of Claims 30 to 43.

45. A method for a computer game that is provided via the Internet and comprises a method according to one of Claims 30 to 44.

46. The method according to Claim 45, **characterised in that** the access to data in the data storage means (C) comprises the employment of an Internet service provider operating as a computer unit (CL).

47. The method according to Claim 45 or 46, **characterised in that** at least two users (B) access the computer game, the computer game being an interactive computer game.

48. The method according to Claim 47, **characterised in that** the data for executing the computer game is transmitted from the computer units (CL) to the respective users (B).

49. The method according to Claim 48, **characterised in that** the data received by the users (B) are processed by the users (B) and transmitted back to the corresponding computer units (CL).

50. The method according to one of Claims 45 to 49, **characterised in that** additionally prespecified parameters of the data transmission between the computer units (CL) and the respective users (B) connected therewith are determined.

51. The method according to Claim 50, **characterised in that** the determination of the prespecified parameters of data transmissions between the computer units (CL) and the respective users (B) connected therewith comprises the determination of the duration of the transmission and/or the fault rate and/or the duration of data processing operations of the individual computer units (CL) and/or the individual users (B) prior to the transmission of the data.

52. The method according to Claim 50 or 51, **characterised in that** the redundant storage of the data for executing the computer game is also carried out as a function of the determined prespecified parameters of the data transmission between the computer units (CL) and the respective users (B) connected therewith.

53. The method according to one of Claims 45 to 52, **characterised in that** control data for executing the computer game is transmitted by the users (B) to the corresponding computer units (CL).

54. The method according to Claim 53, **characterised in that** the control data or equivalent data is transmitted from the computer units (CL) to the data storage means (C).

55. The method according to one of Claims 53 or 54, **characterised in that** the data for executing the computer game is processed by the computer units (CL) as a function of the control data and/or the data for executing the computer game is processed by the data storage means (C) as a function of the control data or of data equivalent to the control data.

## Revendications

1. Système d'accès à des données et de gestion de données destiné à un système informatique, avec :
- au moins deux dispositifs de mémorisation de données (C1, C2,..., Cn),
- au moins une unité d'ordinateur (CL), qui accède à des données des dispositifs de mémorisation de données (C),
- des dispositifs de transmission de données (N) pour la transmission de données entre les dispositifs de mémorisation de données (C) et l'unité d'ordinateur (CL), les données étant sauvegardées de façon redondante dans au moins deux des dispositifs de mémorisation de données (C) qui sont au moins au nombre de deux, et
- des dispositifs de saisie de paramètres prédéfinis de la transmission de données entre les dispositifs de transmission de données (C) et l'unité d'ordinateur (CL), des données étant sauvegardées de façon redondante dans les dispositifs de mémorisation de données (C), en fonction des paramètres prédéfinis déterminés et l'unité d'ordinateur (CL) accédant à l'un des dispositifs mémorisation de données (C), en fonction des paramètres prédéfinis déterminés,
**caractérisé en ce que**
- les dispositifs de mémorisation de données (C) comprennent des dispositifs de saisie de paramètres prédéfinis pour des transmissions de données entre les dispositifs de mémorisation de données (C), et
- les dispositifs de mémorisation de données (C) déplacent des données sauvegardées de façon redondante dans le système, en fonction des paramètres déterminés de transmissions de données entre les dispositifs de mémorisation de données (C), indépendamment d'un accès de l'unité d'ordinateur (CL).

2. Système selon la revendication 1,
**caractérisé en ce que** les dispositifs de mémorisation de données (C) comprennent respectivement des unités de commande pour piloter l'accès aux données et la gestion de données.

3. Système selon l'une quelconque des revendications précédentes,
**caractérisé en ce que** les dispositifs de mémorisation de données (C) copient entre elles des données sauvegardées de façon redondante dans le système en fonction des paramètres déterminés de transmissions de données entres les dispositifs individuels de mémorisation de données (C) et l'unité d'ordinateur (CL) et les suppriment dans les dispositifs de mémorisation de données (C) dans lesquels les données copiées étaient précédemment mémorisées.

4. Système selon l'une quelconque des revendications précédentes,
**caractérisé en ce que** les dispositifs de mémorisation de données (C) traitent les données sauvegardées indépendamment de l'unité d'ordinateur (CL).

5. Système selon l'une quelconque des revendications précédentes,
**caractérisé en ce que** les données sauvegardées dans le système sont divisées en quantités partielles de données (F) et les dispositifs de mémorisation de données (C) sont divisés en cellules (Z), de façon à ce que des quantités partielles de données (F) devant être sauvegardées de façon redondante (F) soient respectivement sauvegardées dans l'une des cellules (Z) des dispositifs de mémorisation de données (C) correspondants.

6. Système selon la revendication 5,
**caractérisé en ce que** les dispositifs de mémorisation de données (C) sont divisés en cellules (Z), en fonction des paramètres de transmission de données.

7. Système selon l'une quelconque des revendications 5 ou 6,
**caractérisé en ce que** chaque cellule (2) présente des données supplémentaires pour l'accès aux données et pour la gestion de données, qui concernent les paramètres des transmissions de données entre les différents dispositifs de mémorisation de données (C) et l'unité d'ordinateur (CL) et/ou des cellules voisines (Z) et/ou des cellules (Z) qui comprennent les données sauvegardées de façon redondante dans le système.

8. Système selon l'une quelconque des revendications 5 à 7,
**caractérisé en ce que** les cellules (Z) échangent entre elles des données qui sont utilisées pour l'accès à des données et pour la gestion de données.

9. Système selon l'une quelconque des revendications 5 à 8,
**caractérisé en ce que** les paramètres de transmissions de données entre les dispositifs individuels de mémorisation de données (C) et l'unité d'ordinateur (CL) sont identiques pour des cellules (Z) d'un dispositif de mémorisation de données (C).

10. Système selon l'une quelconque des revendications précédentes,
**caractérisé en ce que** l'unité d'ordinateur (CL) édite des données pour la sauvegarde dans les dispositifs de mémorisation de données (C) et/ou traite les données sauvegardées dans les dispositifs de mémorisation de données (C).

11. Système selon l'une quelconque des revendications précédentes,
**caractérisé en ce que** l'unité d'ordinateur (CL) est en liaison avec un utilisateur (B) pour transférer les données obtenues et/ou pour être pilotée par l'utilisateur (B).

12. Système selon la revendication 11,
**caractérisé en ce que** l'utilisateur (B) est un PC et/ou une unité centrale d'un ordinateur et/ou un autre dispositif de mémorisation de données.

13. Système selon l'une quelconque des revendications précédentes,
**caractérisé en ce que** l'unité d'ordinateur (CL) est un système mettant à disposition des services Internet.

14. Système selon l'une quelconque des revendications 5 à 13,
**caractérisé en ce que** l'unité d'ordinateur (CL) accède directement aux cellules individuelles (Z) des dispositifs de mémorisation de données (C).

15. Système selon l'une quelconque des revendications précédentes,
**caractérisé en ce que** les paramètres prédéfinis de transmissions de données entre les dispositifs individuels de mémorisation de données (C) et l'unité d'ordinateur (CL) comprennent la durée de transmission et/ou le taux d'erreurs et/ou la durée des traitements de données par les dispositifs individuels de mémorisation de données (C) avant la transmission des données.

16. Système selon l'une quelconque des revendications précédentes,
**caractérisé en ce que** les dispositifs de transmission de données (N) comprennent des liaisons conductrices d'électricité et/ou des systèmes de bus et/ou des réseaux informatiques et/ou des réseaux téléphoniques avec ou sans fil (mobiles) et/ou Internet.

17. Système de banque de données ou structure d'ordinateur, qui gère des données avec un système selon l'une quelconque des revendications 1 à 16.

18. Système pour un jeu informatique mis à disposition via Internet, qui comprend un système selon l'une quelconque des revendications 1 à 17.

19. Système selon la revendication 18,
**caractérisé en ce qu'**au moins une unité d'ordinateur (CL) est un fournisseur de services Internet.

20. Système selon la revendication 18 ou 19,
**caractérisé en ce que** le jeu informatique est un jeu informatique interactif destiné à être utilisé par au moins deux utilisateurs (B).

21. Système selon la revendication 20,
**caractérisé en ce que** chaque utilisateur (B) est respectivement relié à une unité d'ordinateur (CL).

22. Système selon la revendication 20 ou 21,
**caractérisé en ce que** les unités d'ordinateur (CL) transmettent des données aux utilisateurs respectifs (B), pour la réalisation du jeu informatique.

23. Système selon la revendication 23,
**caractérisé en ce que** les utilisateurs (B) traitent les données obtenues pour la réalisation du jeu informatique et les retransmettent aux unités d'ordinateur (CL) correspondantes.

24. Système selon l'une quelconque des revendications 18 à 23,
**caractérisé en ce qu'**il existe des dispositifs d'enregistrement de paramètres prédéfinis de la transmission de données entre les unités d'ordinateur (CL) et les utilisateurs qui y sont respectivement connectés (B).

25. Système selon la revendication 24,
**caractérisé en ce que** les paramètres prédéfinis de transmissions de données entre les unités d'ordinateur (CL) et les utilisateurs respectifs (B) qui y sont connectés comprennent la durée de transmission et/ou le taux d'erreurs et/ou la durée des traitements de données par les unités d'ordinateur individuelles (CL) et/ou de chaque utilisateur (B) avant la transmission des données.

26. Système selon la revendication 24 ou 25,
**caractérisé en ce que** les données pour la réalisation du jeu informatique sont également sauvegardées de façon redondante, en fonction des paramètres déterminés prédéfinis de la transmission de données entre les unités d'ordinateur (CL) et l'utilisateur respectif (B) qui y est connecté.

27. Système selon l'une quelconque des revendications 18 à 26,
**caractérisé en ce que** les unités d'ordinateur (CL) obtiennent de la part des utilisateurs correspondants (B) des données de commande pour la réalisation du jeu informatique.

28. Système selon la revendication 27,
**caractérisé en ce que** les unités d'ordinateur (CL) délivrent aux dispositifs de mémorisation de données (C) les données de commande ou des données correspondantes.

29. Système selon l'une quelconque des revendications 27 ou 28,
**caractérisé en ce que** les unités d'ordinateur (CL) traitent des données pour la réalisation du jeu informatique en fonction des données de commande et/ou les dispositifs de mémorisation de données (C) traitent des données pour la réalisation du jeu informatique en fonction des données de commande ou des données correspondant à des données de commande.

30. Procédé d'accès à des données et de gestion de données pour un système informatique, comprenant les étapes suivantes :
- sauvegarde de données dans au moins deux dispositifs de mémorisation de données (C),
- accès aux données des dispositifs de mémorisation de données (C), à l'aide d'au moins une unité d'ordinateur (CL) par l'intermédiaire de dispositifs de transmission de données (N),
- des paramètres prédéfinis de la transmission de données entre les unités de mémorisation de données (C) et l'unité d'ordinateur (CL) étant déterminés,
- les données étant sauvegardées de façon redondante dans au moins deux des dispositifs de mémorisation de données (C) qui sont au moins au nombre de deux, en fonction des paramètres déterminés de la transmission de données, et
- l'accès aux données ayant lieu en fonction des paramètres déterminés de la transmission de données,
**caractérisé en ce que**
- les dispositifs de mémorisation de données (C) enregistrent des paramètres prédéfinis pour des transmissions de données entre les dispositifs de mémorisation de données (C), et
- des données sauvegardées de façon redondante sont déplacées entre les dispositifs de mémorisation de données, en fonction des paramètres déterminés de transmissions de données entre les dispositifs de mémorisation de données, indépendamment d'un accès de l'unité d'ordinateur (CL) aux données.

31. Procédé selon la revendication 30,
**caractérisé en ce que** l'accès aux données et la gestion de données sont pilotés par les dispositifs de mémorisation de données (C).

32. Procédé selon la revendication 30 ou 31,
**caractérisé en ce que** grâce au procédé, des données sauvegardées de façon redondante sont copiées entre elles par les dispositifs de mémorisation de données, en fonction des paramètres déterminés de transmissions de données entre les dispositifs individuels de mémorisation de données (C) et l'unité d'ordinateur, et qu'elles sont supprimées dans les dispositifs de mémorisation de données dans lesquelles les données ont été préalablement sauvegardées.

33. Procédé selon l'une quelconque des revendications 30 à 32,
**caractérisé en ce que** les données sauvegardées sont traitées par les dispositifs de mémorisation de données (C) indépendamment de l'unité d'ordinateur (CL).

34. Procédé selon l'une quelconque des revendications 30 à 33,
**caractérisé en ce que** les données sont divisées en quantités partielles de données (F) et **en ce que** des quantités partielles de données (F) devant être sauvegardées de façon redondante sont respectivement sauvegardées dans des cellules (Z) des dispositifs individuels de mémorisation de données (C).

35. Procédé selon l'une quelconque des revendications 30 à 34,
**caractérisé en ce que** la division en quantités partielles de données (F) et la sauvegarde dans les cellules (Z) sont réalisées en fonction des paramètres de transmission de données.

36. Procédé selon l'une quelconque des revendications 34 à 35,
**caractérisé en ce que** des données supplémentaires pour l'accès aux données et pour la gestion de données sont sauvegardées dans les cellules (Z) qui concernent les paramètres de transmissions de données entre les dispositifs individuels de mémorisation de données (C) et l'unité d'ordinateur (CL) et/ ou des cellules voisines (Z) et et/ou des cellules qui comprennent des données sauvegardées de façon redondante dans le système.

37. Procédé selon l'une quelconque des revendications 34 à 36,
**caractérisé en ce que** des données supplémentaires pour l'accès aux données et pour la gestion de données sont échangées entre les cellules (Z) des dispositifs de mémorisation de données (C).

38. Procédé selon l'une quelconque des revendications 34 à 37,
**caractérisé en ce que** l'accès à des données de cellules (Z) d'un dispositif de mémorisation de données (C) présente des paramètres de transmission de données identiques.

39. Procédé selon l'une quelconque des revendications 30 à 38,
**caractérisé en ce que** des données sont éditées par l'unité d'ordinateur (CL) pour être sauvegardées dans les dispositifs de mémorisation de données (C) et/ou les données sauvegardées dans les dispositifs de mémorisation de données (C) sont traitées par l'unité d'ordinateur (CL).

40. Procédé selon l'une quelconque des revendications 30 à 39,
**caractérisé en ce que** les données sont transmises à un utilisateur (B) par l'unité d'ordinateur et/ou l'unité d'ordinateur est pilotée par l'utilisateur (B).

41. Procédé selon l'une quelconque des revendications 30 à 40,
**caractérisé en ce que** le procédé met à disposition des services Internet.

42. Procédé selon l'une quelconque des revendications 34 à 41,
**caractérisé en ce que** l'accès a lieu directement aux données de cellules individuelles (Z) des dispositifs de mémorisation des données (C).

43. Procédé selon l'une quelconque des revendications 30 à 42,
**caractérisé en ce que** la détermination des paramètres prédéfinis de transmissions de données entres les dispositifs individuels de mémorisation de données (C) et l'unité d'ordinateur comprend la détermination de la durée de transmission et/ou du taux d'erreurs et/ou de la durée des traitements de données par les dispositifs individuels de mémorisation de données (C) avant la transmission des données.

44. Procédé pour un système de banque de données ou une structure d'ordinateur, qui gère des données à l'aide d'un procédé selon l'une quelconque des revendications 30 à 43.

45. Procédé pour un jeu informatique mis à disposition via Internet, qui comprend un procédé selon l'une quelconque des revendications 30 à 44.

46. Procédé selon la revendication 45,
**caractérisé en ce que** l'accès aux données dans les dispositifs de mémorisation des données (C) comprend l'utilisation d'un fournisseur de services Internet, qui fonctionne en tant qu'unité d'ordinateur (CL).

47. Procédé selon la revendication 45 ou 46,
**caractérisé en ce qu'**au moins deux utilisateurs (B) accèdent au jeu informatique, le jeu informatique étant un jeu informatique interactif.

48. Système selon la revendication 47,
**caractérisé en ce que** les données pour la réalisation du jeu informatique sont transmises par les unités d'ordinateur (CL) aux utilisateurs correspondants (B).

49. Procédé selon la revendication 48,
**caractérisé en ce que** les données obtenues par les utilisateurs (B) sont traitées par les utilisateurs et retransmises aux unités d'ordinateur (CL) correspondantes.

50. Procédé selon l'une quelconque des revendications 45 à 49,
**caractérisé en ce que** des paramètres prédéfinis en supplément de la transmission de données entre les unités d'ordinateur (CL) et les utilisateurs qui y sont respectivement connectés, sont déterminés.

51. Procédé selon la revendication 50,
**caractérisé en ce que** la détermination des paramètres prédéfinis de transmissions de données entre les unités d'ordinateur (CL) et les utilisateurs qui y sont respectivement connectés (B) comprend la détermination de la durée de transmission et/ou du taux d'erreurs et/ou de la durée des traitements de données par les unités d'ordinateur individuelles (CL) et/ou par les utilisateurs (B) individuels avant la transmission des données.

52. Procédé selon la revendication 50 ou 51,
**caractérisé en ce que** la sauvegarde redondante des données pour la réalisation du jeu informatique est également réalisée en fonction des paramètres prédéfinis déterminés de la transmission de données entre les unités d'ordinateur (CL) et les utilisateurs (B) qui y sont respectivement connectés.

53. Procédé selon l'une quelconque des revendications 45 à 52,
**caractérisé en ce que** des données de commande sont transmises aux unités d'ordinateur (CL) correspondantes par les utilisateurs (B) pour la réalisation du jeu informatique.

54. Procédé selon la revendication 53,
**caractérisé en ce que** les données de commande ou des données correspondantes sont transmises aux dispositifs de mémorisation de données (C) par les unités d'ordinateur (CL).

55. Procédé selon l'une quelconque des revendications 53 ou 54,
**caractérisé en ce que** les données pour la réalisation du jeu informatique sont traitées par les unités d'ordinateur (CL) en fonction des données de commande, et/ou les données pour la réalisation du jeu informatique sont traitées par les dispositifs de mémorisation des données (C) pour la réalisation du jeu informatique, en fonction des données de commande et ou des données correspondant aux données de commande.
